(19) **Europäisches Patentamt / European Patent Office / Office européen des brevets**

(11) **EP 4 245 044 B1**

(12) **EUROPEAN PATENT SPECIFICATION**

(45) Date of publication and mention
of the grant of the patent:
**08.07.2026  Bulletin 2026/28**

(21) Application number: **21892807.5**

(22) Date of filing: **11.11.2021**

(51) International Patent Classification (IPC):
*H04W 4/029* (2018.01)    *G01S 5/06* (2006.01)
*G06F 3/147* (2006.01)    *H04L 67/1095* (2022.01)
*G07C 1/28* (2006.01)

(52) Cooperative Patent Classification (CPC):
**G06F 3/147; G01S 5/06; G07C 1/28;**
**H04L 67/1095; H04W 4/029;** G01S 2205/08

(86) International application number:
**PCT/US2021/058975**

(87) International publication number:
**WO 2022/103957 (19.05.2022 Gazette 2022/20)**

(54) **SYSTEM AND METHOD FOR REAL-TIME TRACKING OF ATHLETES ACROSS GEOGRAPHICALLY SEPARATED VENUES**

SYSTEM UND VERFAHREN ZUR ECHTZEITVERFOLGUNG VON SPORTLERN ÜBER GEOGRAFISCH GETRENNTE VERANSTALTUNGSORTE

SYSTÈME ET PROCÉDÉ DE SUIVI EN TEMPS RÉEL D'ATHLÈTES DANS DES SITES GÉOGRAPHIQUEMENT SÉPARÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2020   US 202063112590 P**

(43) Date of publication of application:
**20.09.2023   Bulletin 2023/38**

(73) Proprietor: **Isolynx, LLC**
**Haverhill, MA 01835 (US)**

(72) Inventors:
• **DEANGELIS, Douglas J.**
**Newbury, Massachusetts 01951 (US)**

• **SIGEL, Kirk M.**
**Ithaca, New York 14850 (US)**
• **EVANSEN, Edward G.**
**Newbury, Massachusetts 01985 (US)**
• **LACROIX, Hugues**
**Haverhill, Massachusetts 01835 (US)**

(74) Representative: **Dehns Germany Partnerschaft mbB**
**Theresienstraße 6-8**
**80333 München (DE)**

(56) References cited:
EP-A1- 3 657 454        AU-A1- 2012 201 523
US-A1- 2013 231 760     US-A1- 2018 316 942
US-A1- 2019 351 288     US-A1- 2019 357 009
US-A9- 2005 203 714     US-B1- 6 726 567

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method and a system for real-time tracking of a plurality of athletes competing in an event across a plurality of geographically separated venues.

BACKGROUND

Pacing systems use lights to provide electronic pacing for athletes. For example, a running track may have a series of LED lights installed around an inner circumference of the track. These lights may be turned on and off sequentially around the track at a selected timing. A runner may select the timing to match a particular training goal. Similar systems may be used in a straight line for agility training or swimming.

Systems and methods for tracking performance of a player on a sporting field may use an ultra-wideband (UWB) tracking tag positioned on the player, as described in U.S. Patent No. 9,950,238, titled "Object Tracking System Optimization and Tools." Wireless tracking tags may be positioned on an athlete's clothing or equipment. A variety of receivers may be installed around a perimeter of the sporting field to receive pings and other data from tracking tags. Players can be tracked as they move around the sporting field, and performance metrics may be measured and displayed. The data may be displayed and/or used in a variety of ways.

Tracking tags may be used in any sporting field or environment with defined boundaries. As described in U.S. Patent No. 10,433,113, titled "System and Method of Determining Split-times in a Relay Race," batons carried by runners in a relay race may be outfitted with wireless tracking tags that periodically transmit a wireless signal. Wireless receivers positioned around a track receive the wireless signals and calculate an instantaneous position of a baton. Tracking signals may be used to determine split times during a relay race, for example, or identify other performance metrics such as when an athlete accelerates or decelerates during their leg of the race or the speed of each racer during a baton handoff.

For example, document US 2013/231760 A1 discloses methods, systems and devices for presenting event feedback information regarding participants to an event. A first radio of a first participant device carried by a first participant receives a first checkpoint communication from a checkpoint device at a first checkpoint located along a first course of the event. The first checkpoint communication includes a first checkpoint identifier and a first event time reflecting when the first participant crossed the first checkpoint. A first checkpoint event time is determined based upon the first checkpoint identifier and the first event time. Also, the first checkpoint event time is displayed on the first participant device. Further, a checkpoint device and an event server may be used to in presenting the event feedback information.

SUMMARY

The present invention relates to a method and a system for real-time tracking of a plurality of athletes competing in an event across a plurality of geographically separated venues with the features of the independent claims.

The embodiments of the present invention facilitate real-time competition between athletes in geographically separated venues. At each venue, athletes wear tracking tags that are monitored by a local tracking system to generate tracking data indicating the location of the athletes in real-time (e.g., every 25 ms). This data is then transmitted to the other venues. The tracking data local to one venue can be combined with the tracking data received from remote venues to drive a local pacing system or ribbon board display so that the performance of athletes in different venues may be observed in real time (e.g., by the athletes while they compete). Alternatively or additionally, the data can be displayed (e.g., on a large-screen display, scoreboard, webcast, television feed, etc.) so that attendees can watch the competition as it occurs.

For athletes to remotely compete in real-time, the present embodiments may take advantage of high-bandwidth, reduced-latency computing networks across large geographic areas. Amazon Web Services (AWS) Local Zones is an example of low-latency networks, each implemented within a metropolitan area. Marketed for real-time gaming and other applications, AWS Local Zones can achieve latencies below 10 ms. One aspect of the present embodiments is the realization that these low latencies can be used to implement real-time competitions between athletes that are geographically separated, or remote, from each other. These real-time competitions have some similarities to synchronous real-time online games (e.g., multiplayer online games, or MMOGs), except that the present embodiments use object tracking systems to track the motion of athletes and objects (e.g., balls, batons, etc.) in real physical space, as opposed to motion in a virtual world or computer-simulated environment.

The term "real-time" is used herein to mean that all athletes at all venues participate in one activity at the same time. However, due to network latency and differences in local timing, it may be challenging to ensure perfect synchronicity of the competition or activity at the different venues. For example, consider a race run by several athletes, each on a separate track. The recorded start time may vary by up to a few seconds across the venues. In some embodiments, each venue includes a GPS receiver that outputs a time-of-day signal. With these GPS receivers, the venues can ensure that the race starts synchronously at all venues, i.e., to within a level of uncertainty that can be ignored for the activity at hand (e.g., less than 1 ms variation in start times). This feature is more generally referred to as global synchronicity.

In other embodiments, the race starts asynchronously at the venues. All data recorded at one venue, and transmitted to the other venues, can be time-stamped relative to the local recorded start time, thereby indicating the elapsed time since the local start. At any given instant, the different local start times means that the race has elapsed for different durations at the different venues. For one venue, the elapsed time is the greatest, i.e., at this one venue, the race started earlier than all other venues. At this earliest venue, the pacing system or display may be controlled to reflect the locations of other participants, even though data for the other participants has not yet been received for the elapsed time. In this case, the data received at the earliest venue can be extrapolated in time to predict the locations of the other participants. At another venue, the elapsed time is the shortest, i.e., at this venue the race started later than all other venues. At this latest venue, data may have already been received, from the other venues, about the other participants at the shorter elapsed time. In this case, the data received at the latest venue is still used to determine locations of the other participants, but not via extrapolation.

More generally, a venue may receive data from one or more "earlier" venues, one or more "later" venues, or both. For each later venue, the received data may be extrapolated to temporally align the performance of the remote athlete to the local athlete. For each earlier venue, the received data need not be extrapolated, but may be interpolated to improve the synchronization between the local and remote athletes. Since extrapolations can lead to increased error, it may be beneficial to reduce the variation in start times across the different venues (e.g., by using global synchronicity, as described above). Improving the extrapolated locations makes the information displayed by the pacing system more accurate.

In one example of how the present embodiments may be used, consider several college track teams that wish to compete against each other in a meet. Each of these teams may install one of the present system embodiments at their own track, thereby allowing the meet to occur without any of the teams having to travel. By reducing travel, the present embodiments advantageously reduce costs for athletic teams, save time for the athletes and coaches, and reduce environmental emissions associated with travel. Furthermore, the present embodiments limit direct person-to-person contact, advantageously allowing sports competitions to occur while reducing the epidemiological concern of creating superspreader events.

The present embodiments can change the nature of the competition itself. For example, when each college track team competes on its own track, then all teams have a "home-track" or "home-field" advantage. Furthermore, by having teams compete more often on their home track, it is easier for friends, family, teachers, and others to attend and watch the competition. This increased attendance can help raise awareness of a sport among a community, foster involvement and interest, and provide a psychological "boost" to the athletes that may enhance the experience of competition and sportsmanship.

In the following discussion, the present embodiments are described for use with a running race around a stadium-shaped track. However, other types of activities are envisaged, such as car racing, track cycling, swimming, horse racing, and rowing. The activity may be indoor (e.g., an indoor running track) or outdoor (e.g., an outdoor running track). The present embodiments may also be integrated with fully automatic timing systems, such as starting guns, sensors (e.g., tactile touch pads), finish line cameras (e.g., line-scan cameras, full-frame cameras, etc.), and break-beam systems. In addition, the present embodiments are not limited to only one athlete at each venue. Rather, each venue can have multiple athletes competing against each other locally, in addition to competing against athletes that are remote.

The present embodiments include a method for real-time tracking of a plurality of athletes competing in an event across a plurality of geographically separated venues. The method is performed during the event at a local venue of the plurality of geographically separated venues. The method includes generating a local start signal at a local start time that indicates when the event started at the local venue. The method also includes receiving, from a remote venue of the geographically remote venues, a remote start time and remote tracking data for a remote athlete of the plurality of athletes. The remote athlete is located at the remote venue. The remote start time indicates when the event started at the remote venue. The method also includes receiving local tracking data for a local athlete of the plurality of athletes. The local athlete is located at the local venue. The method also includes synchronizing, based on the local and remote start times, the remote tracking data to the local tracking data to generate synchronized remote tracking data.

Other embodiments include a system for real-time tracking of a plurality of athletes competing in an event across a plurality of geographically separated venues. The system includes a local starting system that generates a local start signal at a local start time to indicate when the event starts at a local venue of the plurality of geographically separated venues. The system also includes a local computing system in communication with the local starting system. The local computing system includes a processor and a memory communicably coupled to the processor. The memory stores machine-readable instructions that, when executed by the processor, control the local computing system to (i) receive local tracking data for a local athlete of the plurality of athletes, (ii) receive, from a remote venue of the plurality of geographically separated venues, a remote start time and remote tracking data for a remote athlete of the plurality of athletes, the remote start time indicating when the event started at the remote venue, and (iii) synchronize, based on the local and remote start times, the remote tracking data to the local tracking data to generate synchronized remote tracking data.

## BRIEF DESCRIPTION OF THE FIGURES

FIG. 1 shows a system for real-time tracking of athletes in remote venues, in embodiments.

FIG. 2 is a flowchart illustrating a method for simultaneously starting an event in remote venues, in embodiments.

FIG. 3 shows the system of FIG. 1 during an event between participants at each venue, in embodiments.

FIG. 4 is a plot of distance as a function of elapsed time at the moment depicted in FIG. 3.

FIG. 5 illustrates how remote data points can be extrapolated to synchronize these remote data points to the local timing of a venue, in embodiments.

FIG. 6 illustrates how remote data points can be interpolated to synchronize these remote data points to the local timing of a venue, in embodiments.

FIG. 7 shows a graphical display displaying a race based on local tracking data and remote tracking data that has been synchronized to the local starting time, in an embodiment.

FIG. 8 illustrates free-space operation with longitudinal and transverse distances.

FIG. 9 shows one exemplary object tracking system with automatic optimization, in an embodiment.

FIG. 10 shows one exemplary tag that includes a battery, circuitry, and an antenna, in an embodiment.

FIG. 11 shows the tag of FIG. 9 attached to an athlete.

FIG. 12 is a graph illustrating one exemplary ping rate of the tag of FIG. 9.

FIG. 13 shows exemplary radial propagation of one ping from the tag of FIG. 9.

FIG. 14 shows the tag of FIGS. 9 and 10 in further exemplary detail.

FIG. 15 shows a system for determining split times in a relay race run around a running track, in an embodiment.

## DETAILED DESCRIPTION

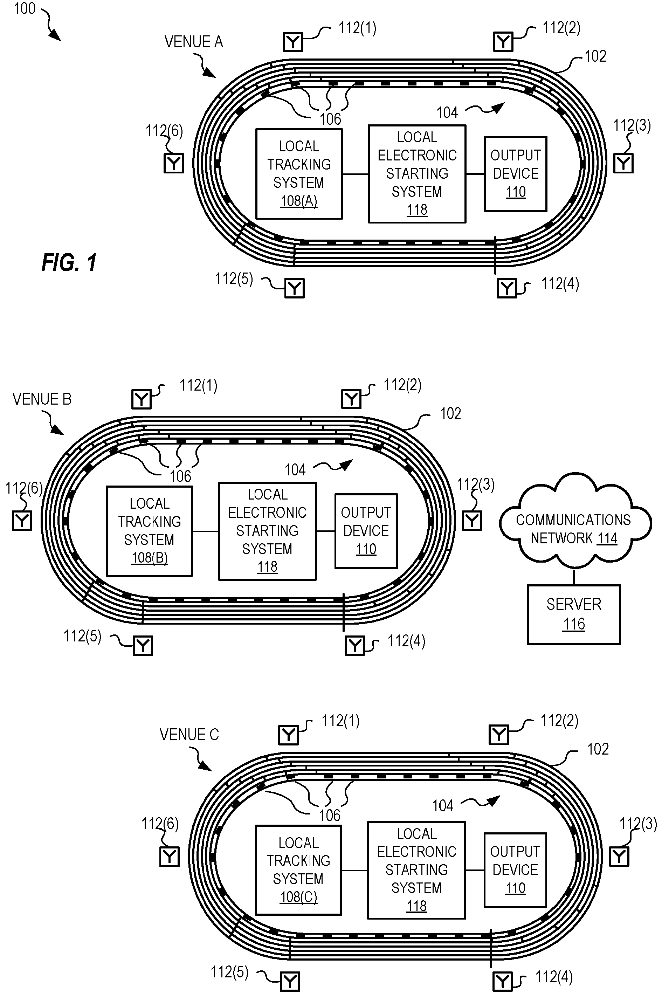

FIG. 1 shows a system 100 for real-time tracking of athletes in remote venues. Each of venues A, B and C includes a running track 102 having a number of lanes. Track 102 may be used for a variety of race events, and may use a segment of track 102, an entire circuit of track 102, or several circuits of track 102. An event may have a single participant in each lane, or multiple participants (e.g., a relay race). Participants may start in different lanes, remain in separate lanes throughout the event, or converge on a single lane as the event proceeds. Herein, the participants may also be referred to as athletes.

Track 102 includes a pacing system 104 around the innermost lane. Pacing system 104 has a number of lights 106 around the inner circumference of track 102 (e.g., adjacent to the inner-most lane of track 102). Pacing system 104 may be controlled by local tracking system 108 so that lights 106 are illuminated sequentially at a desired pace and appear to move around track 102. In this way, a runner on track 102 may set the desired pace and keep up with the lights to maintain the desired pace. Instead of pacing system 104, a ribbon board display may be lined around the innermost lane, and controlled to illuminate lights 106 sequentially. Additionally, a second ribbon board display may be lined around the outermost lane.

In a competition on track 102, participants may wear tracking tags, described in more detail below, that allow various parameters of the participant's performance to be tracked. These parameters may include location or aspects of motion such as those detected by an accelerometer in the tag. Tags emit pings representing digital tracking data that are detected by receivers 112(1), 112(2), 112(3), 112(4), 112(5), and 112(6). Receivers 112 send the digital tracking data to local tracking system 108.

Local tracking systems 108(A), 108(B), and 108(C) in venues A, B, and C, respectively, are connected to a communication network 114. This connection may be wired or wireless and any suitable communication protocol may be used. One or more servers 116 or other computing devices may be accessible to local tracking systems 108 over communications network 114. Although three venues are shown in FIG. 1, the system 100 may be used with any number of venues without departing from the scope hereof.

Venues A, B and C may host simultaneous events that allow participants at one venue to compete with participants at another venue in real time using pacing system 104. Each local tracking system 108 starts an event in the local venue using local electronic starting system 118. Local tracking system 108 saves the local starting time and sends local digital tracking data to the local tracking systems 108 of remote venues over communications network 114. Local tracking systems synchronize remote digital tracking data with the local starting time, then use the synchronized digital tracking data to drive pacing system 104, as described in more detail below. A participant in a venue remote from the local venue may be assigned a color, for example, and lights 106 may be set to sequentially turn on and off in the assigned color so the progress of the participant in the remote venue is visible to participants and spectators in the local venue.

Local tracking system 108 may also display digital tracking data on an output device 110, such as a display, TV graphics, live web results, or commentator information system. Both local and remote digital tracking data may be displayed in the local venue or sent to a remote viewing device.

System 100 may also provide for storing digital tracking data from one or more venues on server 116, which may store the data, combine it for a composite display and/or send it to other systems such as websites or broadcasters for further display. Digital tracking data may also be stored in local tracking system 108 and used, for example, to compare participant performance across multiple heats of an event so that cumulative standings may be generated in real time.

In embodiments, system 100 facilitates live competition between participants in different venues. To provide a meaningful comparison, individual venues manage a local event to provide a valid result, and also synchronize digital tracking data from remote venues to provide a valid composite race in real time. To synchronize digital tracking data, the local tracking system uses an understanding of how the local start time relates to start times in other venues.

Race Starting

The electronic starting system 118 in each of the venues A, B, and C generates a local start signal using any of several methods that may be generally categorized as automatic, manual, or hybrid. Automatic starting methods use electronic communication between the venues (e.g., via the communication network 114) to coordinate the simultaneous generation of start signals at all venues, and require little, if any, human involvement. By contrast, manual starting methods require human involvement, and may be as simple as an official or operator at each venue pressing a "start" button. Hybrid starting methods combine elements of automatic and manual methods, such as requiring an operator to manually confirm various statuses and states. Automatic methods advantageously improve synchronicity by coordinating the electronic starting systems 118 to generate the local start signals at similar times (e.g., within a 10 ms time window). Manual methods are simpler to implement than automatic methods, but may result in less synchronicity (i.e., a greater spread of local start times). Hybrid methods are a trade-off that combine the synchronicity of automatic methods with the simplicity of manual methods.

Each electronic starting system 118 may also be equipped to respond to a false start. This false-start functionality may be either automatic (i.e., based on sensors and electronics) or manual (i.e., requiring human involvement). Some examples of automatic false-start functionality are described in U.S. Patent No. 6,002,336. As an example of manual false-start functionality, an operator who views a false start may press a button on the starting system 118 to indicate that a false start occurred. Another type of false-start functionality, either automatic or manual, may be used without departing from the scope hereof. In any case, the starting system 118 communicates to all remote venues that a false start occurred. When a starting system 118 receives a communication from a remote venue that a false start occurred, the starting system 118 may indicate to the athletes that a false start occurred. For example, the starting system 118 may play an announcement on a public-address system or a similar type of audio system.

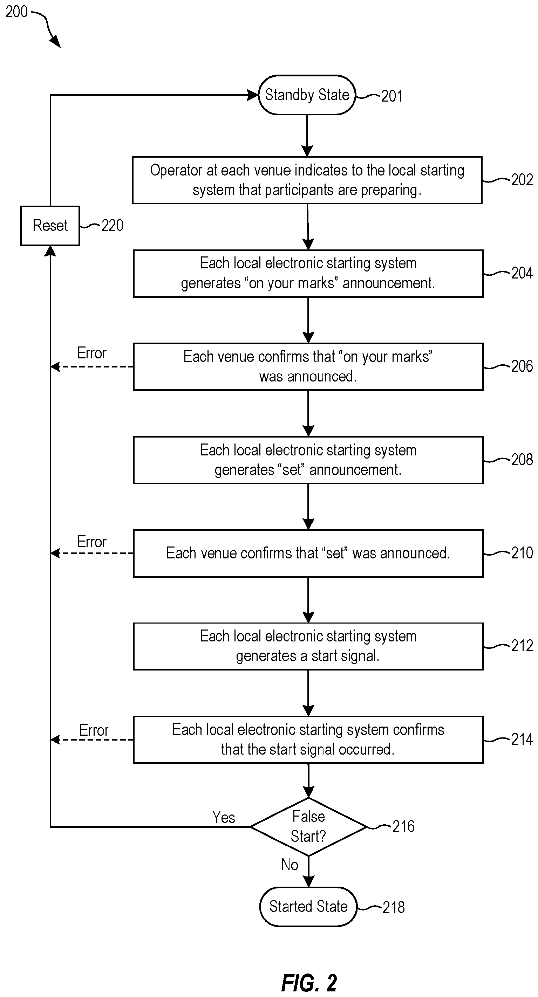

FIG. 2 is a flowchart illustrating a method 200 for simultaneously starting an event in remote venues. The method 200 is one example of an automatic starting method that is performed by the electronic starting system 118 and local tracking system 108 at each venue, and the remote server 116 (when included). Each starting system 118 generates a local start signal based on a GPS (Global Positioning System) TOD (time of day) signal, and therefore includes a GPS antenna or other means of syncing to GPS time. As an alternative to GPS, a different type of global navigational satellite system (GNSS) may be used, such as Galileo, GLONASS, or BeiDou. Alternatively, network-based synchronization may be used instead of satellite-based synchronization, such as network time protocol (NTP) or precision time protocol (PTP).

The method 200 begins with each starting system 118 in a "standby" state, as shown in block 201. In the block 202, an operator at each venue indicates to the local electronic starting system 118 that participants in the local venue are preparing to start. Thus, block 202 is performed at each venue. Here, "preparing" means that the runners are lining up, and that "on your marks" will soon be announced. The local starting system 118 then communicates to all other remote venues that the local participants are preparing by indicating that the local starting system 118 is in a "prepared" state. The local starting system 118 may also receive communications from remote venues indicating that the corresponding remote starting systems 118 are in the "prepared" state. Since a local starting system 118 may enter the "prepared" state after one or more remote starting systems 118, each starting system 118 may listen for communications from remote venues while in the "standby" state.

In block 204, once all starting systems 118 have indicated the "prepared" state, an "on your marks" announcement is made to the participants. Block 204 is performed at each venue (e.g., by each starting system 118). In one example of block 204, each starting system 118 controls a speaker to output "on your marks" at a first designated TOD in the near future.

In block 206, each venue confirms that "on your marks" was announced. In an example of block 206, the local starting system 118 confirms that it has successfully played the message at the first designated TOD. If confirmed, the local starting system 118 may then switch from the "prepared" state to a "ready" state. If unconfirmed, the local starting system 118 may transition to an "error" state. In either case, the local starting system 118 then communicates its current state to all other remote venues.

As part of block 206, the local starting system 118 receives a communication from each remote venue indicating the state of its remote starting system 118. If the local starting system 118 receives any communication indicating an "error" state, the local starting system 118 transitions to a "remote error" state. After transitioning to the "remote error" state, the local starting system 118 may automatically play an announcement to the participants to "stand up". Alternatively, an operator may view an indication of the "remote error" state, and make the announcement. The "remote error" state may then be cleared by resetting each starting system 118 back to the "standby" state (see block 220), after which the method 200 may be restarted.

Alternatively in block 206, an operator may manually confirm that "on your marks" was announced. For example, the operator may press a button to transition the local starting system 118 to the "ready" state. Alternatively, the operator may manually indicate an error, thereby transitioning the local starting system 118 to the "error" state.

In block 208, once all participating venues have indicated the "ready" state, a "set" announcement is made to the participants. Block 208 is performed at each venue (e.g., by each starting system 118). In one example of block 208, each starting system 118 controls a speaker to output "set" at a second designated TOD in the near future.

In block 210, each venue confirms that "set" was announced. In an example of block 210, the local starting system 118 confirms that it has successfully played the message at the second designated TOD. If confirmed, the local starting system 118 may then switch from the "ready" state to a "set" state. If unconfirmed, the local starting system 118 may transition to the "error" state. The local starting system 118 then communicates its current state to the other venues.

As part of block 210, the local starting system 118 receives a communication from each remote venue indicating the state of its remote starting system 118. If the local starting system 118 receives any communication from a remote venue indicating an "error" state, the local starting system 118 transitions to the "remote error" state. After transitioning to the "remote error" state, the local starting system 118 may automatically play an announcement to the participants to "stand up". Alternatively, an operator may view an indication of the "remote error" state, and make the announcement. The "remote error" state may be cleared by resetting each starting system 118 back to the "standby" state (see block 220), after which the method 200 may be restarted.

Alternatively in block 210, an operator may manually confirm that "set" was announced. For example, the operator may press a button to transition the local starting system 118 to the "set" state. Alternatively, the operator may manually indicate an error, thereby transitioning the local starting system 118 to the "error" state.

In block 212, once all participating venues have indicated the "set" state, a local start signal is generated. Block 212 is performed at each venue. In one example of block 212, each starting system 118 triggers a gun sound at a third designated TOD in the near future. Alternatively or additionally, each starting system 118 may trigger a stroboscopic flash at the third designated TOD. Each starting system 118 may generate the gun sound by firing a gun with a blank cartridge, or by firing an electronic "gun" that produces the gun sound over a speaker or public-address system. An acoustic sensor may be used to identify the sound, thereby confirming that the local start signal was generated. The output of the acoustic sensor may be communicated to the local tracking system 108 to determine the local start time at the venue, as based on when the local participants heard the gun sound.

In block 214, each venue confirms that the local start signal occurred. In one example of block 206, the local starting system 118 confirms that it successfully triggered the gun sound at the third designated TOD. If confirmed, the local starting system 118 may then switch from the "set" state to a "started" state (see block 218). If unconfirmed, the local starting system 118 may transition to the "error" state. In either case, the local starting system 118 then communicates its current state to all other venues.

As part of block 214, the local starting system 118 receives a communication from each remote venue indicating the state of its remote starting system 118. If the local starting system 118 receives any communication from a remote venue indicating an "error" state, the local starting system 118 transitions to the "remote error" state. After transitioning to the "remote error" state, the local starting system 118 may automatically play an announcement to the participants to "stand up". Alternatively, an operator may view an indication of the "remote error" state, and make the announcement. The error may be cleared by resetting each starting system 118 back to the "standby" state (see block 220), after which the method 200 may be restarted.

Alternatively, an operator may manually indicate to the local starting system 118 that the gun sound occurred. For example, the operator may press a button to transition the local starting system 118 to the "started" state (see block 218). Alternatively, the operator may manually indicate an error, thereby transitioning the local starting system 118 to the "error" state.

Decision block 216 allows for false-start functionality, as described above. If a false start is detected at a venue, the local starting system 118 at the venue transitions to a "false start" state. This state is then communicated to all other venues to indicate that a false start occurred. Similarly, the local starting system 118 may receive a communication from a remote venue indicating that a false start occurred. In this case, the local starting system 118 may transition to a "remote false start" state and automatically play an announcement to the participants that a false start occurred. Alternatively, an operator may view an indication of the "remote false start" state and make the announcement. To restart the race, each starting system 118 may be reset back to the "standby" state (see block 220).

The embodiment of the method 200 described above is for a race with blocks (e.g., a sprint) in which the participants hear an "on your marks" announcement followed by a "set" announcement. In other embodiments, the method 200 is modified for a distance race in which there is only an "on your marks" announcement (i.e., there is no "set" announcement). Specifically, the method 200 may exclude blocks 208 and 210, and block 212 may begin after all the venues have confirmed that "on your marks" was announced.

Embodiments of the method 200 described above in which an operator manually confirms may be considered examples of hybrid starting methods. In another example of a hybrid starting method, the method 200 excludes the block 210. In this embodiment, the starting systems 118 do not communicate with each other when they transition to the "set" state. Instead, a local official or operator manually generates the local start signal (i.e., the block 212). Alternatively, the local starting system 118 generates the local start signal at a fixed duration after transitioning to the "set". Since the local start times do not all occur at a designated TOD, this embodiment will likely result in a greater variety of local starting times. After the local start signals have occurred, the starting systems 118 may communicate the "started" state with each other so that it is known at each venue that the race properly started at all venues (e.g., the block 214).

As an example of a manual starting method, officials at the venues may agree to start the race at a predetermined time (e.g., based on a wristwatch or smartphone). At the agreed-upon time, each official may start the race by either firing a blank in a gun or signaling to the local starting system 118 that it should generate the starting signal by playing a gun sound over a speaker. Since this method does not use electronic communication between the local starting systems 118 to synchronize start signals, it will likely lead to a greater variation in start times. Nevertheless, it is still possible for the start times to occur, for example, within a few seconds of each other. This variation is small enough that participants and viewers will likely still experience the race as occurring "simultaneously" at all venues.

It should be appreciated that the above-described starting methods are only some of the ways to coordinate the start of a race across the participating venues. Other starting methods may be used without departing from the scope hereof.

Data Processing

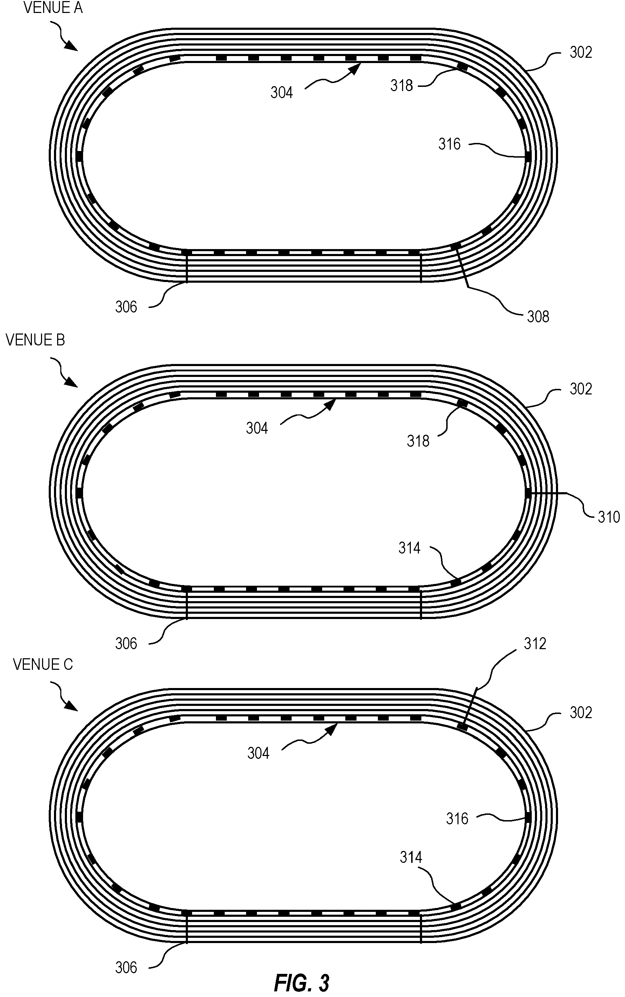

FIG. 3 shows the system 100 of FIG. 1 during an event between participants at each venue. Each of venues A, B and C includes track 302 and pacing system 304 around an inner circumference of track 302. For clarity, other components of FIG. 1 are not shown in FIG. 3. In addition, although only one participant at each venue is discussed below, there may be any number of participants at a given venue and more than one may be tracked in other venues.

FIG. 3 illustrates a moment during the event (e.g., after starting the event using the method 200). At this moment, runner A in venue A is at the position indicated by line 308, runner B in venue B is at the position indicated by line 310, and runner C in venue C is at the position indicated by line 312. Generally, runner A may be represented by a green light 314 in pacing system 304 of venues B and C. Likewise, runner B may be represented by a red light 316 in pacing system 304 of venues A and C, and runner C may be represented by a blue light 318 in pacing system 304 of venues A and B.

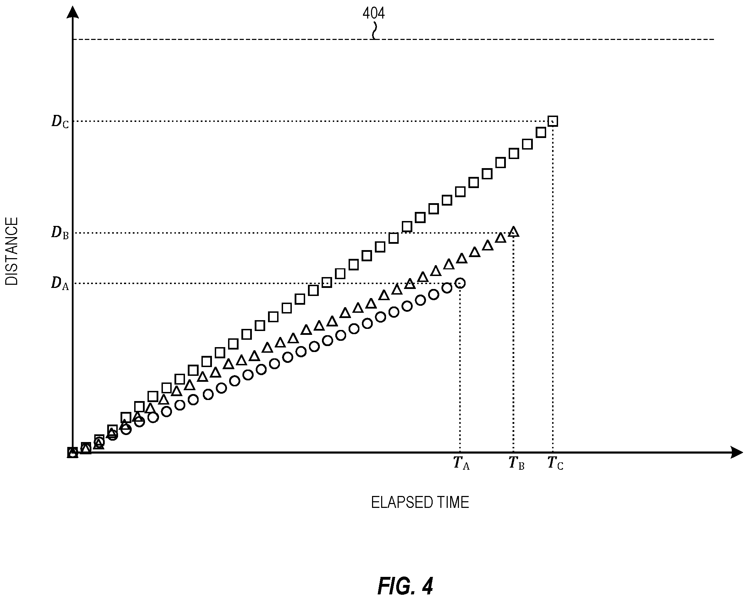

FIG. 4 is a plot of distance as a function of elapsed time for runners A, B, and C, at the moment depicted in FIG. 3. The data points in FIG. 4 are examples of the digital tracking data described above. The elapsed time at a venue is measured relative the local start time. Due to network latencies and other delays, the local start times may not be exactly the same at all venues. For example, the local start time at venue C may be $T_S^{(C)}$, the local start time at venue B may be $T_S^{(B)} = T_S^{(C)} + 1s$, and the local start time at venue A may be $T_S^{(A)} = T_S^{(C)} + 2s$. At a venue, the elapsed times can be calculated by subtracting the local start time from the times at which the tracked locations were obtained. In FIG. 4, the tracked locations of runner A are shown as circles, the tracked locations of runner B are shown as triangles, and the tracked locations of runner C are shown as squares. All runners start at the origin (i.e., a distance of 0 at an elapsed time of 0).

FIG. 4 illustrates the different elapsed times at the different venues. Specifically, at the moment shown in FIG. 4, runner A has run a distance $D_A$ over an elapsed time $T_A$, corresponding to the line 308 in FIG. 3. Similarly, runner B has run a distance $D_B$ over an elapsed time $T_B$, corresponding to the line 310 in FIG. 3, and runner C has run a distance $D_C$ over an elapsed time $T_C$, corresponding to the line 312 in FIG. 3. Also shown in FIG. 4 is the distance 404 to the finish line. The slope of a runner's data points gives that runner's speed. Thus, in FIG. 4, runner C maintains the highest speed since runner C has a steeper slope than runners A and B. Runners B and C have similar slopes, and therefore maintain similar speeds. However, runner B accelerated faster than runner A at the beginning of the race, and therefore has run a farther distance than runner A (for equal elapsed times).

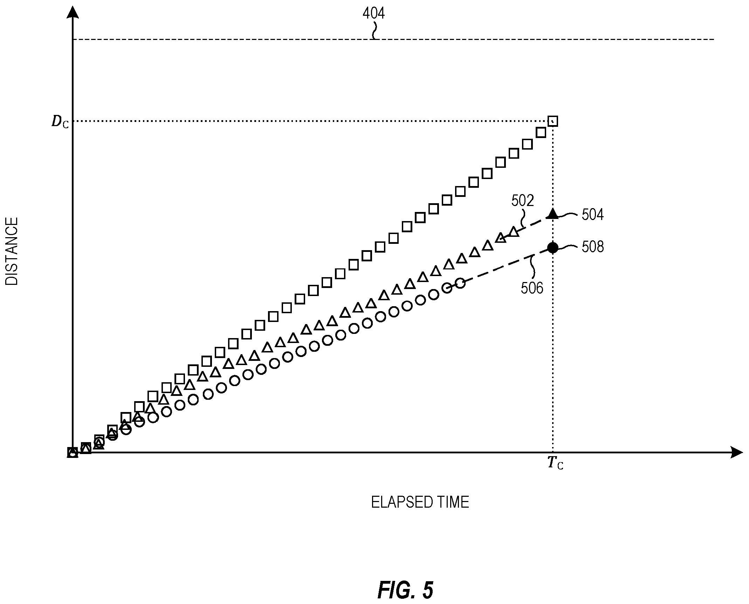

FIG. 5 illustrates a method for a method for synchronizing remote data points to the local timing of a venue. In FIG. 5, venue C is the local venue, while venues A and B are remote. The pacing system of venue C is controlled to display the location of runners A and B at the local elapsed time of $T_C$. However, tracking data at this elapsed time does not yet exist due to the delayed starts at venues A and B (or the tracking data has not yet been received at venue C, e.g., due to network latency). Controlling the pacing system to display the latest distances of runners A and B will underestimate their distances, leading runner C to inadvertently think that he or she is farther ahead of runners A and B than he or she really is.

To improve accuracy, the distances covered by runners A and B can be estimated by extrapolating the data for these runners that has already been received at venue C. For example, FIG. 5 shows how an extrapolated line 502 can be formed from the two or more most-recent distances known for runner B, and how the extrapolated line 502 can be used to create a projected data point 504 for runner B at the elapsed time $T_C$. Similarly, an extrapolated line 506 can be formed from the two or more most-recent distances known for runner A. The extrapolated line 506 can be used to create a projected data point 508 for runner A at the elapsed time $T_C$. The pacing system at venue C can then be controlled according to the projected data points 504 and 508 to accurately indicate the locations of runners A and B relative to runner C. A minimum of two distances are needed to create an extrapolated line. However, more than two distances can be used to generate an extrapolated curve (e.g., a non-straight line, such as a polynomial), which may improve the accuracy of the resulting projection, as compared to using a straight line.

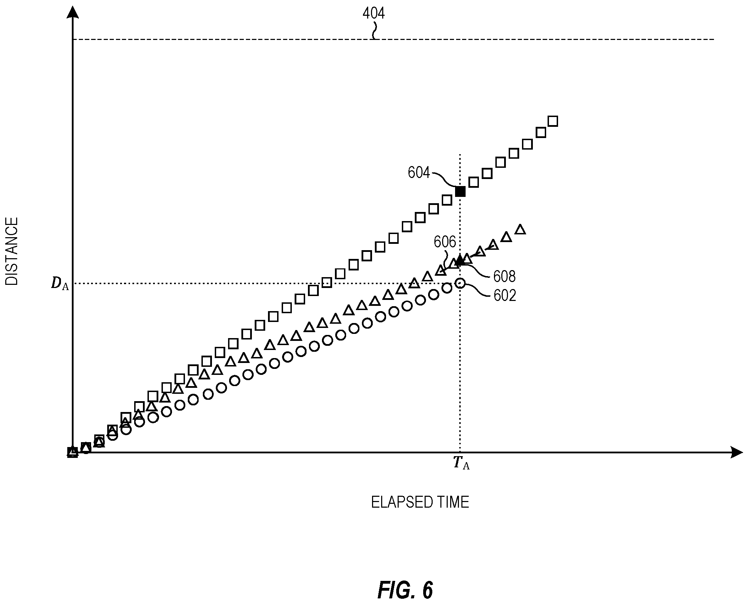

FIG. 6 illustrates another method for synchronizing remote data points to the local timing of a venue. In FIG. 6, venue A is the local venue, while venues B and C are remote. The pacing system of venue A should be controlled to display the location of runners B and C at the local elapsed time of $T_A$, corresponding to a reference data point 602. Venue A has already received tracking data for runners B and C for this elapsed time, and therefore may use this data to control the pacing system to accurately represent the locations of runners B and C. For example, a nearest data point 604 is the one data point for runner C whose time-coordinate is closest to $T_A$, and therefore best estimates the location of runner C at the elapsed time $T_A$. Identifying and selecting the nearest data point 604 is referred to herein as "nearest-point selection".

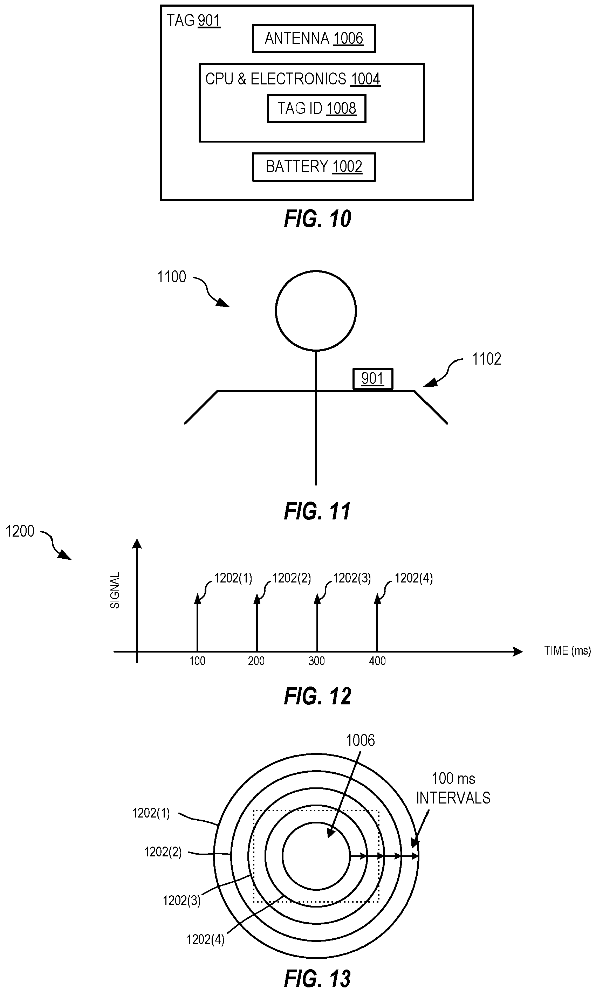

In many situations, it is unlikely that runners B and C will have data points at exactly the elapsed time $T_A$ (i.e., at an elapsed time for which runner A has a data point). Data points that do not occur at exactly the same elapsed time are referred to herein as "unsynchronized". For example, in FIG. 6 the elapsed time $T_A$ lies between two of runner B's data points. Data points will be unsynchronized when runners are tracked with different periods (e.g., different ping rates; see FIG. 12). Furthermore, it is unlikely that a runner's first position is recorded exactly at an elapsed time of zero. Therefore, a runner's data points may be shifted in elapsed time by up to one period of the corresponding ping rate. Different shifts in elapsed time will also result in unsynchronized data points.

To improve accuracy, data for runners B and C may be synchronized to the data for runner A using interpolation instead of nearest-point selection. For example, FIG. 6 shows how several data points for runner B, around the elapsed time $T_A$, can be used to create a best-fit curve 606 that is subsequently used to generate an interpolated data point 608 for runner B. The pacing system at venue A can then be controlled according to the interpolated data point 608 to accurately indicate the location of runner B. While FIG. 6 shows the best-fit curve 606 as a straight line, the best-fit curve 606 may alternatively be a non-straight line, such as a polynomial. The interpolated data point 608 and reference data point 602 are synchronized.

The improved accuracy of interpolation, as compared to nearest-point selection, decreases with the tracking period (i.e., as the ping rate increases), and may be negligible for certain situations. Here, "negligible" means less than a target accuracy. For example, at a tracking period of 40 ms (i.e., a ping rate of 25 Hz), nearest-point selection may be sufficiently accurate (e.g., better than a target accuracy of 10 cm) for a running race. However, for other types of races in which participants move at faster speeds (e.g., automobile racing), each participant will cover a larger distance during each tracking period. In this case, the improved accuracy of extrapolation may be beneficial.

When venue B is the local venue, and venues A and C are remote, the local pacing system should be controlled to display the location of runners A and C at the local elapsed time of $T_B$. In this case, the data received for runner A can be extrapolated to create a projected data point for runner A. Similarly, the nearest data point to $T_B$ can be selected for runner C. Alternatively, the data received for runner C can be used interpolated to obtain an interpolated data point that represents the distance for runner C at $T_B$. The local pacing system at venue B can then be controlled according to the projected data point to indicate the location of runner A. Similarly, the local pacing system can be controlled according to the nearest data point or interpolated data point to indicate the location of runner C.

More generally, at a local venue, extrapolation can be used with any tracking data received from a remote venue whose start time occurred after the start time of the local venue. Similarly, selection of a nearest data point (or interpolation) can be used with any tracking data received from a remote venue whose start time occurred before the start time of the local venue. Therefore, a local venue may perform extrapolation on data from some venues, and nearest data-point selection (or interpolation) on data received from other venues.

Those trained in the art will recognize that extrapolation can sometimes result in inaccurate projections, especially for projections relatively far forward in time. An automatic starting method (e.g., the method 200 of FIG. 2) can be used to advantageously reduce the variation of local start times among the venues, thereby improving the accuracy of the extrapolation. However, other starting methods (e.g., manual or hybrid) may be used with a tolerable variation of local start times. For example, an electronic start signal generated at a first venue can be transmitted via the communications network 114 to other venues, each of which uses the received start signal to locally trigger the start of the race. In this case, the first venue will have the earliest start time, and the other venues will have later start times determined, at least in part, by the network latency. However, if the network latency is low enough (e.g., less than 1 second), the variation in local start times may still be small enough to ensure accurate extrapolation.

Displaying

As described above, each venue also includes one or more output devices (110 of FIG. 1). For example, a TV production crew may access video feeds from all venues with similar (and low) latency, and perform real-time blending of the video streams, knowing that each participant's progress could be directly compared live. Cameras could be set up in the same locations in each venue and even be programmed to make the same movements at the same time. The video feeds may also be broadcast via the Internet (e.g., via download onto a wireless electronic device, either local to a venue or remote).

When displaying locations of participants in a video stream, each participant may be represented by a symbol with characteristics that differentiate it from symbols representing other participants. The symbol characteristics may include color, size, shape, orientation, and texture. Each symbol may also include text, such as a participant name or team name. Symbol characteristics may be selected based on individual participants. For example, each participant may be represented by a symbol with a unique color or shape. Some participants may share certain symbol characteristics. For example, all participants on the same team may be represented by symbols of the same color, where the color is unique to the team. Otherwise, different shapes may be used to differentiate between participants on the same team.

One or more of the above symbol characteristics may change in time, for example, in response to changing situations during the race. For example, a first symbol corresponding to a first participant may be displayed in red to indicate that the first participant is in the lead, while a second symbol corresponding to a second participant may be displayed in a different color. When the second participant takes over the lead, the second symbol may switch to red and the first symbol may switch to blue (or another color). In this way, viewers can readily tell from the display when the race leader has changed.

Each symbol may be displayed such that it is centered at a particular (x,y) coordinate. Alternatively, each symbol may be extended and oriented to cross all lanes of the track (e.g., see lines 308, 310, and 312 in FIG. 3).

In an embodiment, digital tracking data from each venue may be used to create avatars for selected participants. In a further embodiment, additional data from the tracking tag on each participant such as cadence (stride length) may be used to model avatars after a specific runner and give a more realistic appearance to the avatar.

In one embodiment, each pacing system or ribbon board display either includes, or is replaced by, a set of projection lights that project information on the track surface. The projection lights may be mounted above the pacing system or ribbon board display so that they project at a downward angle onto the track surface. The projection lights may be controlled to project the names of other athletes at their current locations. Alternatively, the lights may project colored lines or symbols, each indicating a different remote participant. These lines or symbols may be displayed on all lanes, or only some. Advantageously, projecting information onto the track surface may make it easier for local participants to see the locations of remote participants. For example, local participants will not need to look to the side of the track (i.e., at the pacing system or ribbon board display) to see the locations of remote participants.

Accounting for Track Geometries

Although FIGS. 1 and 3 shows tracks 102/302 as having the equivalent size and proportions, this may not always be the case. In embodiments, while track 102/302 in each venue may provide a distance of 400 meters per lap, some may have longer straights and tighter turns, or vice versa. Some tracks may even have a varying radius. This type of difference should be accounted for by local tracking system 108 in each venue. If, for example, local tracking system 108 uses x-y coordinate data from each venue to plot all participants on an aggregate graphical interface or produce an avatar, differences in track geometry will need to be taken into consideration. One way this may be done is through a "snap-to-path" mode, where the aggregate graphical interface uses path distance to identify where participants should be shown. Another way is by using a "free space" mode, as described in more detail below.

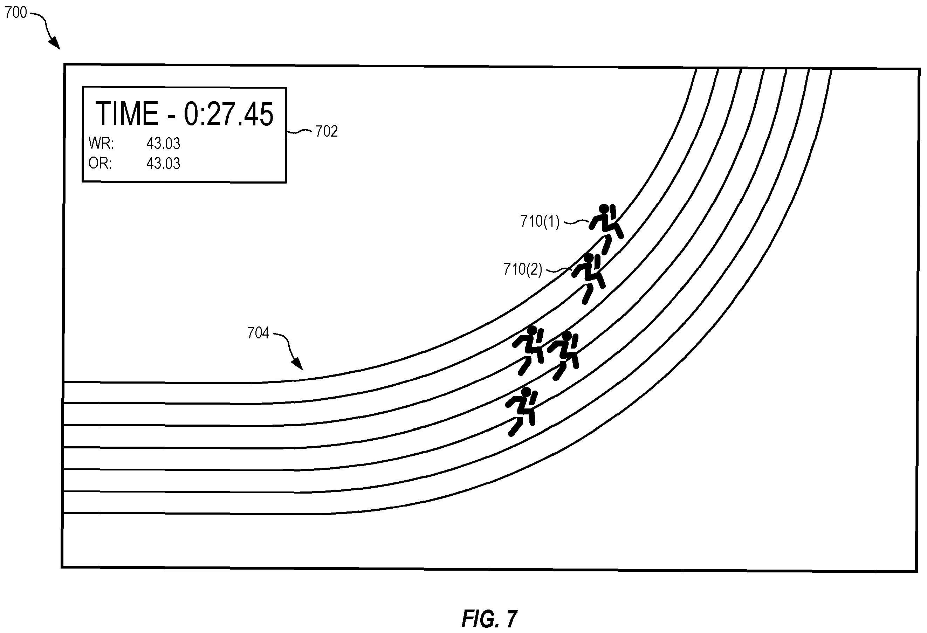

FIG. 7 shows a graphical display 700 displaying a race based on local tracking data and remote tracking data that has been synchronized to the local starting time. The graphical display 700 may be shown on a large-screen display or scoreboard at a local venue so that attendees can watch the race in real-time. Alternatively, the graphical display 700 may be made available for attendees to download and display on a mobile device, such as a smart phone or tablet. The graphical display 700 shows a portion 704 of the running track at the local venue, and icons 710 that represent the current locations of the athletes, relative to the local starting time. While FIG. 7 shows only five athletes, more or fewer athletes may be displayed without departing from the scope hereof. In addition, the graphical display 700 may be controlled to display the entire running track at once, as opposed to just the portion 704. For convenience, a timing box 702 may be shown with the elapsed local time, and other information (e.g., a world record (WR) and Olympic record (OR) for the type of race).

In the example of FIG. 7, the athletes are participating in a 400-meter dash. As the athletes run, the portion 704 that is displayed moves with a frontrunner (represented in FIG. 7 by the icon 710(1)) so that the frontrunner is always displayed (i.e., participants far behind the frontrunner may not appear in the displayed portion 704). Although not shown in FIG. 7, the graphical display 700 may also show starting lines, a finish line, transition zones (e.g., for relay races), and other features overlaid on the portion 704. The icons 710 may be given different colors to differentiate, for example, between runners at the local venue and runners at remote venues. As the participants pass through the curve of the track shown in FIG. 7, the icons 710 may be inverted so that they appear to be running to the left upright, rather than upside down.

In a 400-meter dash, each runner remains in one respective lane for the duration of the race. The runner may be thought of as being confined to a "fixed rail" defined by the respective lane, which allows the object tracking system to readily convert the runner's x-y coordinates into a linear distance run (e.g., see the distance in FIGS. 4-6). The linear distance can then be transmitted to a remote venue (with a time stamp), where it is converted back into x-y coordinates based on the geometry of the running track at the remote venue.

Converting x-y coordinates to linear distances based on a fixed rail, and vice versa, is referred to herein as "snap-to-path" operation. Advantageously, snap-to-path allows athletes running on different-shaped tracks (e.g., radii of curvature at the turns, lengths of straights, etc.) to be displayed simultaneously on the graphical display 700 according to only one track geometry. The graphical display 700 is local to one venue, and therefore displays the portion 704 according to the geometry of the local running rack. Advantageously, snap-to-path can be bypassed for local tracking data since the x-y coordinates of athletes on the local running track can be directly plotted on the portion 704 without having to convert between different track geometries.

As another example, consider a race in which each venue has only one athlete, and all of the athletes run on the same lane of their respective track (e.g., lane 1, or the innermost lane). In this case, all of the icons 710 may be shown on the first lane in FIG. 7. However, this could cause the icons 710 to appear jumbled, making it difficult differentiate the relative positions of the athletes. In this case, snap-to-path can be used to show each athlete in the display 700 as being on a different respective lane, preventing the icons 710 from overlapping on the display, and thereby helping attendees to better determine the runners' relative positions.

In more mathematical terms, snap-to-path uses the fact that at a local running track, there is a one-to-one mathematical correspondence (i.e., a bijection) between the two-dimensional path representing a first lane and a one-dimensional linear distance of the two-dimensional path (i.e., the line-integral of the two-dimensional path). Similarly, there is a one-to-one mathematical correspondence between the one-dimensional linear distance and a different two-dimensional path of a second lane. Therefore, a one-to-one correspondence can be found between the x-y position of the runner in the first lane and the corresponding x-y position of where the runner would be if the runner was in the second lane.

An alternative to snap-to-path is "free-space" operation. Similar to snap-to-path, free-space operation converts the x-y coordinates of a runner from one track to x-y coordinates of the runner on a second track whose geometry is different than that of the first track. However, free-space operation does not assume that there is a bijection between x-y coordinates and a one-dimensional linear distance. Free-space operation may be used, for example, in longer track races where runners change lanes. For example, in races longer than 800 meters, it is common for racers to start in different lanes at staggered positions. After the first turn, runners are free to change lanes, and will typically congregate in the first lane, since this is the shortest. Since runners change lanes, and in unpredictable ways given crowding in the first and second lanes, all runners do not run the same linear distance. This means that linear distance cannot be used as a common metric for comparing the relative performance of runners.

One aspect of the present embodiments is the realization that a different type of distance can be used as a common metric for comparing the relative performance of remotely-competing athletes, given that the athletes may be competing on tracks of different geometries. Specifically, a distinction is made between a longitudinal distance in the direction parallel to the lanes, and a transverse distance in the direction perpendicular to the lanes. When a runner is confined to a lane, transverse distance can be ignored, and the resulting longitudinal distance is the same as the one-dimensional linear distance described above.

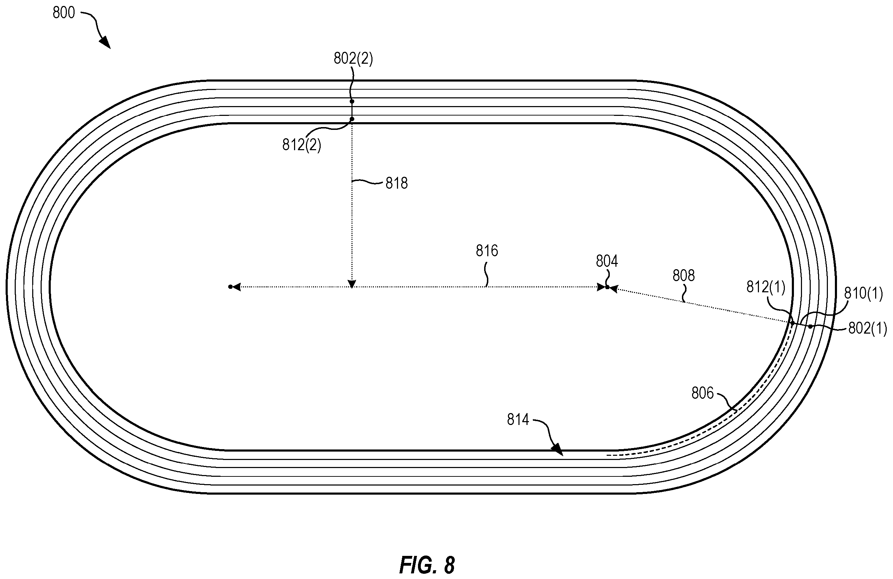

FIG. 8 illustrates free-space operation with longitudinal and transverse distances. In FIG. 8, a first lane 814 of a running track 800 can be used as a reference lane for comparison between a plurality of running tracks having various geometries. Almost all outdoor running tracks are constructed such that the linear length of one complete lap of the first lane 814 is 400 meters. In FIG. 8, a first x-y coordinate 802(1) obtained by a local tracking system is projected onto a corresponding first-lane coordinate 812(1) that represents where the runner would be located if the runner was in the first lane 814.

The first-lane coordinate 812(1) lies along a vector 808 that joins the x-y coordinate 802(1) with a circle center 804 that is part of the geometry of the track 800 (i.e., it is fixed and known). The first-lane coordinate 812(1) is located on the vector 808 at a fixed distance from the circle center 804 (i.e., at a fixed radius for the first lane 814).

The first-lane coordinate 812(1) can be used to update a longitudinal distance 806 traveled by the runner had the runner been running solely in the first lane 814. The distance between the x-y coordinate 802(1) and the first-lane coordinate 812(1) equals a transverse distance 810(1), i.e., how far the runner is transversely located with respect to the first lane 814.

FIG. 8 also shows how longitudinal and transverse distances can be used in a straight section. Specifically, a second x-y coordinate 802(2) obtained by the local tracking system is projected onto a corresponding first-lane coordinate 812(2) by forming a vector 818 that starts at the x-y coordinate 802(2) and intersects a midline 816 of the running track 800 at a right angle. The first-lane coordinate 812(2) is located along the vector 818 at a fixed distance from the midline 816, and can be used to update the longitudinal distance 806. The distance between the x-y coordinate 802(2) and the first-lane coordinate 812(2) equals a transverse distance 810(2).

Longitudinal and transverse distances simplify how a runner's location is displayed (e.g., on the display 700) since they can be easily transformed to account for different track geometries. The longitudinal distance lies along a "fixed rail" of the first lane, and therefore can be readily transformed when switching between track geometries, which allows the runner's icon 710 to be correctly displayed relative to the inner circumference of the track. The transverse distance can then be used to place the runner's icon 710 at the correct location away from the inner circumference, thereby indicating the runner's position with greater accuracy.

While the above discussion refers to x-y coordinates of runners confined to a horizontal plane, it should be appreciated that the above concepts and embodiments can be extended to three spatial dimensions.

Object Tracking System

In embodiments, venues A, B and C of FIG. 1 may use an object tracking system. The system described herein is representative and other tracking systems may be used instead. An object tracking system determines the location of each object, of a plurality of objects, in a defined area (e.g., to within inches) at rates up to hundreds of times per second.

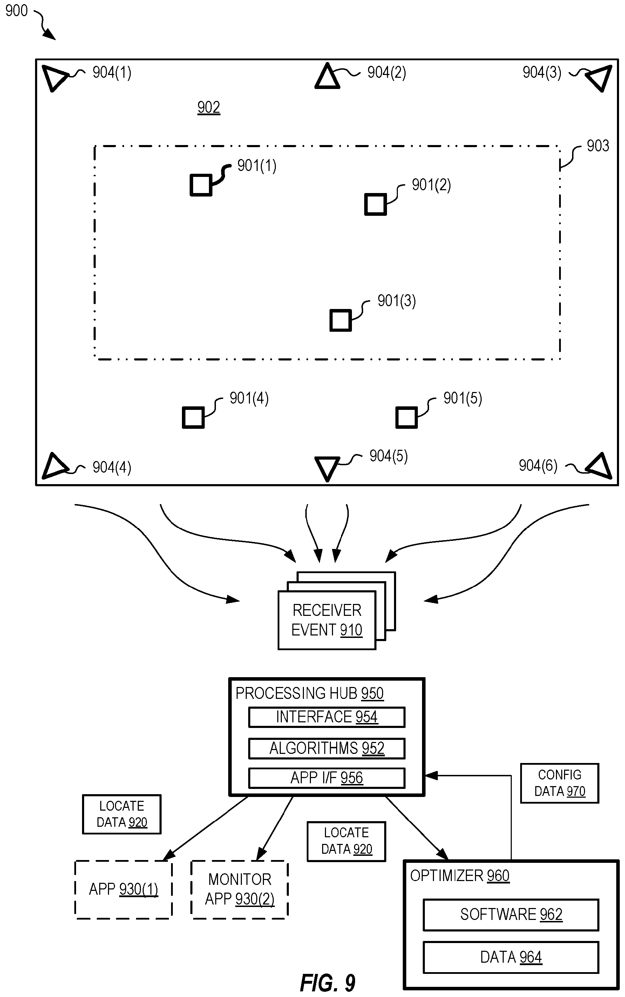

FIG. 9 shows one exemplary object tracking system 900 with automatic optimization. System 900 tracks the location of tags 901 within an operational area 902 (i.e., a tracking environment). System 900 has six receivers 904, positioned at known locations around operational area 902, and in communication with a processing hub 950. System 900 may have three or more receivers without departing from the scope hereof. Tags 901 are attached to objects to be tracked (e.g., athletes, balls, officials, and other equipment of interest), and thereby these tags 901 move within operational area 902. Each receiver 904 is receptive to ultra-wideband (UWB) wireless signals, called "pings" herein (see pings 1202 of FIGS. 12 and 13), from tags 901 and sends one receiver event 910 to processing hub 950 for each detected ping. Algorithms 952 within processing hub 950 processes receiver events 910 and generate locate data 920 for use by one or more applications 930 via an application interface 956 configured with hub 950. Applications 930 may include a graphic display generator that generates a graphic display showing detected locations of players on a field of play 903 (e.g., an area in which the activity of interest occurs, such as an American football field, a soccer field, an athletic running track, and so on), for example.

FIG. 10 shows tag 901 of FIG. 9 in further exemplary detail. Tag 901 includes a battery 1002, circuitry 1004, and an antenna 1006. Each tag 901 has a unique tag ID 1008 for identification. FIG. 11 shows tag 901 of FIGS. 9 and 10 attached to an object of interest. In the example of FIG. 11, tag 901 is positioned on a shoulder 1102 of an athlete 1100 and tag ID 1008 is associated with athlete 1100. FIG. 12 is a graph illustrating exemplary pings 1202 from tag 901, where tag 901 is configured to emit pings 1202 at an exemplary programmable ping rate of 10 Hz. FIG. 13 shows exemplary radial propagation of ping 1202 from tag 901 (not to scale). Each ping 1202 contains information (e.g. tag ID 1008 and battery level) specific to the transmitting tag 901 and, in certain embodiments, ping 1202 may include information (e.g. biometric data) about the object associated with the tag. A primary function of each tag 901 is to periodically generate ping 1202. However, tag 901 may also receive transmissions that configure properties, such as ping rate, dynamically. Tag 901 may include software that includes machine readable instructions that are executed to implement this functionality within tag 901.

As shown in FIG. 9, an optimizer 960 may be communicatively coupled with processing hub 950 to process locate data 920 and to generate configuration data 990 for dynamically controlling system 900 to have optimal performance. For example, performance of system 900 may be optimized as weather and other environmental conditions change during a monitored game, where changes in environmental conditions affect range and detectability of pings 1202 by receivers 904. In another example, tags 901 are dynamically configured based upon and their location, such as when on field of play 903 (i.e., when the athlete is actively participating in a current play) as opposed to when off field of play 903 (i.e., when the athlete is not involved in a current play). Optimizer 960 stores software 962 and data 964.

Processing hub 950 includes a communication interface 954 for communicating with receivers 904 to receive receiver events 910. Algorithms 952 process receiver events 910 from multiple receivers 904 to locate tags 901 and generate locate data 920. For example, based upon three or more receiver events 910 resulting from one ping 1202 from one tag 901, algorithms 952 generate locate data 920 to include tag ID 1008 and a determined location of tag 901. Application interface 956 communicates with one or more applications 930. For example, each application 930 receives locate data 920 from hub 950 and may further process this information to generate displays indicative of the location within an operation environment of objects (e.g., athletes) associated with tags 901 based upon tag ID 1008.

In one embodiment, optimizer 960 is a computer with at least one processor and memory containing machine readable instructions that, when executed by the processor, perform the functionality of optimizer 960 as described herein. In another embodiment, optimizer 960 is implemented within processing hub 950 and comprises machine readable instructions stored within a memory of hub 950 and executed by a processor of hub 950 to perform functionality of optimizer 960 as described herein. Optimizer 960 generates configuration data 970 that configures various properties of object tracking system 900, such as for example ping rate of tags 901, analog gain of each receiver 904, and parameters used within algorithms 952 of hub 950.

Basic Location Operation

The process of locating an object associated with tag 901 begins when tag 901 generates ping 1202. As shown in FIG. 13, ping 1202 propagates radially outward from antenna 1006 of tag 901 toward receivers 904, positioned around the perimeter of operational area 902. Receivers 904 within a transmission range of tag 901, and having a line of sight (LOS) to tag 901, receive ping 1202. By "LOS", as used herein, it is meant a straight line of wireless transmission that is not obstructed, LOS does not necessarily relate to visual line of sight. Signal strength of ping 1202 at each receiver 904 depends upon a distance between tag 901 and that receiver 904, and whether there were any obstructions, such as player bodies or other objects, between the tag and the receiver (i.e., preventing LOS). Whether, or not, receiver 904 is able to decode information (e.g., tag ID 1008 and other information) of ping 1202 depends upon the signal strength of ping 1202 at the receiver and a gain setting of programmable gain stage of the receiver. If the signal strength and gain setting are sufficient to allow analog signal detection electronics to decode the information within ping 1202, analog signal detection electronics time-stamps that information and passes it along as receiver event 910 to processing hub 950. Where processing hub 950 receives at least three receive events 910 for ping 1202 (i.e., at least three receivers 904 receive and decode the same ping 1202 based upon tag ID 1008 and time stamp within each receiver event 910), algorithms 952 within processing hub 950 have a sufficient number of data points (time stamps) to attempt location of tag 901 using time difference of arrival (TDOA) techniques.

A successful calculation of a location of the tag 901 by processing hub 950 is called a "locate". Locate data 920 corresponds to digital tracking data and contains many such locates as determined for each tag 901 within operational area 902. Locates, within locate data 920, are made available to applications 930 in real-time (i.e., almost instantaneously). Thus, applications 930 have real-time identification and location information of each tag 901 and its associated object within operational area 902.

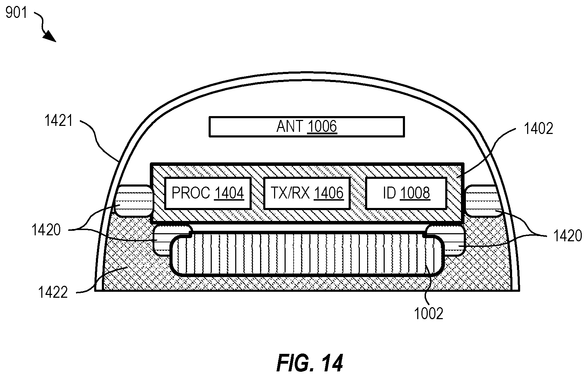

FIG. 14 shows an embodiment of tag 901 of FIGS. 9 and 10. Tag 901 is a physical device that includes a battery 1002, antenna 1006, and CPU and electronics that are formed of a circuit board 1402 with a processor 1404 (e.g., a microcontroller), and a transceiver 1206 that couples with antenna 1006. Antenna 1006, circuit board 1402, and battery 1002 are protected by an open casing 1421 and a potting material 1422. A protective material 1420 (e.g., hot glue) is applied around the circuit board 1402 and battery 1002 to prevent potting material 1422 from contacting sensitive components that require an air surround.

Tracking Runners in a Track Venue

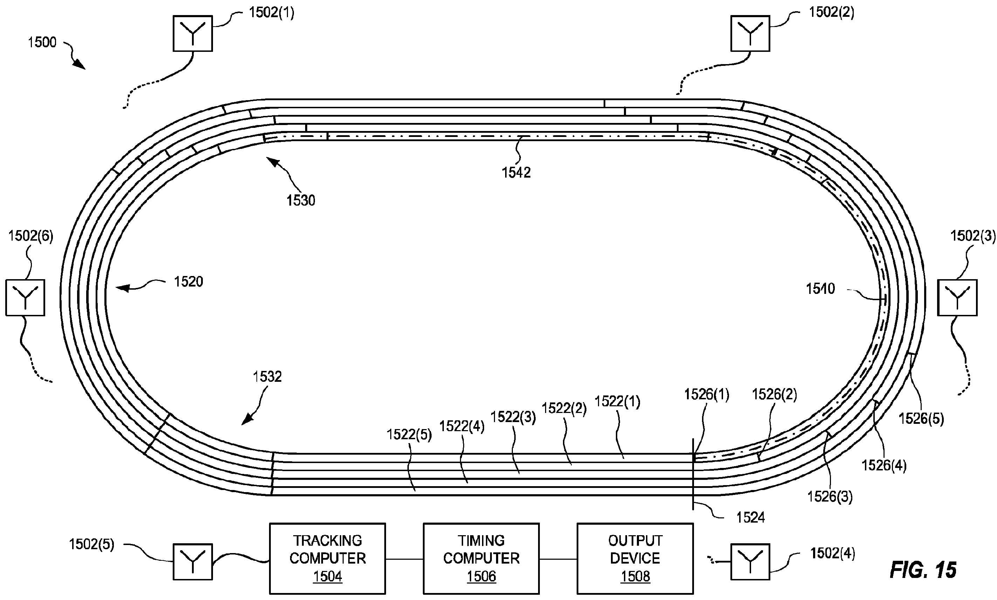

In embodiments, venues A, B and C may use an object tracking system described in connection with FIGS. 9-11 in a venue including a running track. FIG. 15 shows one system 1500 for determining split times in a relay race run around a running track 1520. The following examples illustrate a four by one-hundred meter (4×100) relay race on a 400-meter track, however other distances may be similarly timed without departing from the scope hereof.

FIG. 15 illustratively shows running track 1520 with five lanes 1522, a finish line 1524, a plurality of staggered start positions 1526, and first, second, and third staggered take-over zones 1528, 1530, 1532, respectively, for a 4×100 relay race. In the example of FIG. 15, the relay race distance is four hundred meters, divided into four segments (legs) of approximately one hundred meters each, where each of four athletes of a relay team runs a different one of the segments in one of the lanes. For each relay race, participants may be using a tag 901 attached to their clothing or a baton incorporating the components of tag 901.

In FIG. 15, a first segment of lane 1522(1) is indicated by dashed line 1540 and a second segment of lane 1522(1) is indicated by dashed-dotted line 1542. The first athlete of the team runs the first segment carrying a relay baton, and passes the baton to the second athlete, who runs the second segment. The second athlete passes the baton to the third athlete who runs the third segment. The third athlete passes the baton to the fourth athlete who finishes the race. The baton is passed between athletes as they run within take-over zones 1528, 1530, and 1532 of each lane.

System 1500 includes at least three wireless receivers 1502 (e.g., six are shown in FIG. 15) positioned around track 1520 such that each ping 1204 is received in at least three receivers 1502 as participants move around track 1520. Receivers 1502 are time synchronized and record information (e.g., data transmitted within ping 1204 and received signal strength of ping 1204) of ping 1204 together with a time of arrival of ping 1204 at the receiver. Each receiver 1502 is communicatively coupled (wired and/or wirelessly) with a tracking computer 1504 that receives, for each ping 1204, the ping information, the time of arrival of each ping 1204 to receiver 1502, and identification of receiver 1502. Tracking computer 1504 is, for example, a computer that includes software that is executed by a processor to determine a location of tag 901 within track 1520 based upon a known (i.e., predetermined) location of each receiver 1502 relative to track 1520 and the time of arrival of each transmitted ping 1204 at each receiver 1502. Thus, for each tracked tag 901, tracking computer 1504 periodically (e.g., every 50 ms or less) determines a location relative to track 1520.

Tracking computer 1504 is communicatively coupled (wired and/or wirelessly) with a timing computer 1506 that utilizes the periodically determined locations of tags 901 relative to track 1520 to calculate digital tracking data for participants running around track 1520. Without departing from the scope hereof, tracking computer 1504 and timing computer 1506 may be implemented within a single, common computer.

System 1500 may also determine other metrics of each athlete. For example, system 1500 may determine a speed of each tag 901, and thereby a speed of the athlete wearing the tag. Tag 901 may include an accelerometer, allowing stride frequency to be reported and associated length to be calculated based on baton speed.

In further embodiments, real-time positional data (digital tracking data) from multiple venues may be used to create a real-time broadcast of a race with animated participants (e.g., "in-venue" athletes with holograms of real athletes in other venues). The "record pace" athlete could be inserted via augmented reality as an animated image. The animated image may be that of the actual athlete that set the record.

The present embodiments include a method for real-time tracking of a plurality of participants competing in an event across a plurality of geographically separated venues. The event may be a sporting event, in which case the participants are athletes. The method is performed during the event and at a local venue of the plurality of geographically separated venues. Venues A, B, and C of FIG. 1 are examples of three geographically separated venues.

The method includes the step of generating a local start signal at a local start time that indicates when the event started at the local venue. In one example of this step, local electronic starting system 118 generates a local start signal. The local start signal may be generated at a predetermined local start time (e.g., according to a GNSS time-of-day signal). Alternatively, the local start signal may measure the local start signal (e.g., with an acoustic sensor).

The method also includes the step of receiving, from a remote venue, a remote start time and remote tracking data for a remote athlete of the plurality of athletes. The remote athlete is located at the remote venue. The remote start time indicates when the event started at the remote venue. In one example of this step, venue B of FIG. 1 receives the remote start time and remote tracking data from venue A. This data is transmitted from venue A to venue B via communications network 114.

The method also includes the step of receiving local tracking data for a local athlete of the plurality of athletes. The local athlete is located at the local venue. In one example of this step, local tracking system 108(B) tracks athletes local to venue B. In one embodiment, the local tracking system 108(B) generates the local tracking data by processing wireless signals (e.g., pings) transmitted by one or more tracking tags attached to each local athlete. As described above, the local tracking system 108(B) may process the pings using TDOA techniques. However, another type of tracking system or technique may be used without departing from the scope hereof.

The method also includes the step of synchronizing, based on the local and remote start times, the remote tracking data to the local tracking data to generate synchronized remote tracking data. In one example of this step, the remote tracking data is extrapolated or interpolated to identify where a remote athlete would be located at the elapsed time of the local venue. FIGS. 4-6 shows examples of extrapolation and interpolation.

In some embodiments, the step of synchronizing includes extrapolating the remote tracking data when a local elapsed time at the local venue is greater than a remote elapsed time at the remote venue. This extrapolation generates a local projected data point of the remote athlete corresponding to the local elapsed time. The synchronized remote tracking data includes this local projected data point. In these embodiments, the step of synchronizing also includes selecting, when the local elapsed time is less than the remote elapsed time, a nearest data point of the remote tracking data closest to the local elapsed time. The synchronized remote tracking data includes the nearest data point.

In some embodiments, the method further includes the step of outputting the local tracking data and the synchronized remote tracking data. In some of these embodiments, the synchronized remote tracking data is used to drive a pacing system (e.g., see pacing system 104 in FIG. 1) or ribbon board display at the local venue to indicate the synchronized remote tracking data to the local athlete. In one of these embodiments, lights lining an inner edge of a running track at the local venue are sequentially illuminated (e.g., see light 106 in FIG. 1). In some of these embodiments, the local tracking data and the synchronized remote tracking data are displayed (e.g., see the graphical display 700 of FIG. 7). At least a portion of a map of the local venue may also be displayed.

In some embodiments, the method also includes generating a remote start signal at the remote venue. The remote start signal is generated at the remote start time, which is then transmitted (e.g., via communication network 114) to the local venue. The local and remote start signals may occur independently (i.e., without synchronization). Alternatively, the local and remote start signals may be synchronized to occur simultaneously (e.g., based on a time-of-day signal generated at each of the remote and local venues).

Other embodiments include a system for real-time tracking of a plurality of athletes competing in an event across a plurality of geographically separated venues. The system includes a local starting system that generates a local start signal at a local start time to indicate when the event starts at a local venue (e.g., see local starting systems 108 in FIG. 1) of the plurality of geographically separated venues. The system also includes a local computing system in communication with the local starting system. The local computing system comprises a processor and a memory communicably coupled to the processor. The local computing system also includes machine-readable instructions that, when executed by the processor, control the local computer system to implement any method or technique described herein. For example, the memory may store machine-readable instructions that, when executed by the processor, control the local computing system to (i) receive local tracking data for a local athlete of the plurality of athletes, (ii) receive, from a remote venue of the plurality of geographically separated venues, a remote start time and remote tracking data for a remote athlete of the plurality of athletes, and (iii) synchronize, based on the local and remote start times, the remote tracking data to the local tracking data to generate synchronized remote tracking data. The remote start time indicates when the event started at the remote venue.

Changes may be made in the above methods and systems without departing from the scope hereof. It should thus be noted that the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall therebetween.

## Claims

1. A method for real-time tracking of a plurality of athletes competing in an event across a plurality of geographically separated venues, said method being performed during the event and at a local venue of the plurality of geographically separated venues, said method comprising:

   generating, by a starting system at the local venue, a local start signal at a local start time that indicates when the event started at the local venue;
   receiving, from a remote venue of the plurality of geographically separated venues and via a network, a remote start time determined by a remote starting system at the remote venue, the remote start time indicating when the event started at the remote venue;
   receiving, from a remote tracking system, remote tracking data for a remote athlete of the plurality of athletes, the remote athlete being located at the remote venue, the remote tracking data being determined in real-time by a plurality of first receivers detecting a wireless transmission transmitted at intervals from a first tracking tag attached to the remote athlete, the remote tracking data defining real-time remote tracked locations and associated remote tracked times;
   receiving, from a local tracking system located at the local venue, real-time local tracking data for a local athlete of the plurality of athletes, the local athlete being located at the local venue, the local tracking data being determined in real-time by a plurality of second receivers detecting wireless transmissions transmitted at intervals from a second tracking tag attached to the local athlete, the local tracking data defining real-time local tracked locations and associated local tracked times;
   synchronizing, based on the local and remote start times, the remote tracking data to the local tracking data to generate synchronized remote tracking data; and
   extrapolating, when a local elapsed time at the local venue is greater than a remote elapsed time at the remote venue, the remote tracking data to generate a local projected data point of the remote athlete corresponding to the local elapsed time, the synchronized remote tracking data including the local projected data point; and
   generating a graphical display for the event indicating both a location of the remote athlete based on the synchronized remote tracking data and a location of the local athlete based on the local tracking data.

2. The method of claim 1, the local tracking system determining the local tracked locations based on at least three of the second receivers decoding the wireless transmissions.

3. The method of claim 1 or claim 2, further comprising driving a pacing system or a ribbon board display at the local venue with the synchronized remote tracking data to indicate the synchronized remote tracking data to the local athlete.

4. The method of any one of claims 1 to 3, further comprising simultaneously displaying the local tracking data and the synchronized remote tracking data on at least a portion of a map of the local venue.

5. The method of any one of claims 1 to 4, further comprising determining the local start time based on a time-of-day signal generated at the local venue.

6. The method of any one of claims 1 to 5,

   further comprising generating, at the remote venue, a remote start signal at the remote start time;
   wherein said generating the local start signal and said generating the remote start signal occur independently.

7. The method of any one of claims 1 to 5,

   further comprising generating, at the remote venue, a remote start signal at the remote start time;
   wherein said generating the local start signal and said generating the remote start signal occur simultaneously based on a time-of-day signal generated at each of the remote and local venues.

8. The method of any one of claims 1 to 7, wherein said synchronizing the remote tracking data comprises:
   selecting, when the local elapsed time is less than the remote elapsed time, a nearest data point of the remote tracking data closest to the local elapsed time, the synchronized remote tracking data including the nearest data point.

9. The method of any one of claims 1 to 8, further comprising:

   transmitting, to the remote venue and over the network, the local tracking data and the local start time;
   synchronizing, at the remote venue and based on the local and remote start times, the local tracking data to the remote tracking data to generate synchronized local tracking data; and
   outputting, at the remote venue, the remote tracking data and the synchronized local tracking data.

10. The method of claim 9, wherein said synchronizing the local tracking data comprises:

   extrapolating, when a remote elapsed time is greater than a local elapsed time, the local tracking data to generate a remote projected data point of the remote athlete corresponding to the remote elapsed time, the synchronized local tracking data including the remote projected data point; and
   selecting, when the remote elapsed time is less than the local elapsed time, a nearest data point of the local tracking data closest to the remote elapsed time, the synchronized local tracking data including the nearest data point.

11. A system for real-time tracking of a plurality of athletes competing in an event across a plurality of geographically separated venues, comprising:

   a local starting system that generates a local start signal at a local start time to indicate when the event starts at a local venue of the plurality of geographically separated venues; and
   a local computing system in communication with the local starting system, the local computing system comprising a processor and a memory communicably coupled to the processor, the memory storing machine-readable instructions that, when executed by the processor, control the local computing system to:

   receive the local start time from the local starting system;
   receive, from a local tracking system at the local venue, local tracking data for a local athlete of the plurality of athletes, the local tracking data being determined in real-time by a plurality of first receivers detecting wireless transmissions transmitted at intervals from a first tracking tag attached to the local athlete, the local tracking data defining real-time local tracked locations and associated local tracked times;
   receive a remote start time, determined by a remote starting system at a remote venue of the plurality of geographically separated venues indicating when the event started at the remote venue;
   receive, from a remote tracking system, remote tracking data for a remote athlete of the plurality of athletes, the remote tracking data being determined in real-time by a plurality of second receivers detecting a wireless transmission transmitted at intervals from a second tracking tag attached to the remote athlete, the remote tracking data defining real-time remote tracked locations and associated remote tracked times; synchronize, based on the local and remote start times, the remote tracking data to the local tracking data to generate synchronized remote tracking data; and extrapolate, when a local elapsed time at the local venue is greater than a remote elapsed time at the remote venue, the remote tracking data to generate a local projected data point of the remote athlete corresponding to the local elapsed time, the synchronized remote tracking data including the local projected data point; and generating a graphical display for the event indicating both a location of the remote athlete based on the synchronized remote tracking data and a location of the local athlete based on the local tracking data.

12. The system of claim 11, the local tracking system generating the local tracking data based on at least three of the first receivers decoding the wireless transmission.

13. The system of claim 11 or claim 12, further comprising a local pacing system or ribbon board display that indicates the synchronized remote tracking data to the local athlete.

14. The system of any one of claims 11 to 13, further comprising a video system that displays the local tracking data and the synchronized remote tracking data.

15. The system of any one of claims 11 to 14,

further comprising a global-navigation-satellite-system receiver that outputs a time-of-day signal;
wherein the local starting system determines the local start time based on the time-of-day signal.

**Patentansprüche**

1. Verfahren zur Echtzeit-Verfolgung einer Vielzahl von Athleten, die an einer Veranstaltung über eine Vielzahl von geografisch getrennten Veranstaltungsorten hinweg gegeneinander antreten, wobei das Verfahren während der Veranstaltung und an einem lokalen Veranstaltungsort der Vielzahl von geografisch getrennten Veranstaltungsorten durchgeführt wird, wobei das Verfahren umfasst:

Erzeugen, durch ein Startsystem am lokalen Veranstaltungsort, eines lokalen Startsignals zu einer lokalen Startzeit, die angibt, wann die Veranstaltung am lokalen Veranstaltungsort begonnen hat;
Empfangen, von einem Fernveranstaltungsort der Vielzahl von geografisch getrennten Veranstaltungsorten und über ein Netzwerk, einer Fern-Startzeit, die von einem Fern-Startsystem am Fernveranstaltungsort bestimmt wurde, wobei die Fern-Startzeit angibt, wann die Veranstaltung am Fernveranstaltungsort begonnen hat;
Empfangen, von einem Fern-Verfolgungssystem, von Fern-Verfolgungsdaten für einen Fernathleten der Vielzahl von Athleten, wobei sich der Fernathlet am Fernveranstaltungsort befindet, wobei die Fern-Verfolgungsdaten in Echtzeit durch eine Vielzahl von ersten Empfängern ermittelt werden, die eine drahtlose Übertragung erfassen, die in Intervallen von einem ersten Verfolgungsetikett gesendet wird, das am Fernathleten angebracht ist, wobei die Fern-Verfolgungsdaten in Echtzeit erfasste Fern-Positionen und zugehörige Fern-Erfassungszeitpunkte definieren;
Empfangen, von einem lokalen Verfolgungssystem, das sich am lokalen Veranstaltungsort befindet, von lokalen Echtzeit-Verfolgungsdaten für einen lokalen Athleten der Vielzahl von Athleten, wobei sich der lokale Athlet am lokalen Veranstaltungsort befindet, wobei die lokalen Verfolgungsdaten in Echtzeit durch eine Vielzahl von zweiten Empfängern ermittelt werden, die drahtlose Übertragungen erfassen, die in Intervallen von einem zweiten Verfolgungsetikett gesendet werden, das am lokalen Athleten angebracht ist, wobei die lokalen Verfolgungsdaten in Echtzeit erfasste lokale Positionen und zugehörige lokale Erfassungszeitpunkte definieren;
Synchronisieren, auf der Grundlage der lokalen und der Fern-Startzeit, der Fern-Verfolgungsdaten mit den lokalen Verfolgungsdaten, um synchronisierte Fern-Verfolgungsdaten zu erzeugen; und
Extrapolieren, wenn eine lokale verstrichene Zeit am lokalen Veranstaltungsort größer ist als eine Fern-verstrichene Zeit am Fernveranstaltungsort, der Fern-Verfolgungsdaten, um einen lokalen projizierten Datenpunkt des Fernathleten zu erzeugen, der der lokalen verstrichenen Zeit entspricht, wobei die synchronisierten Fern-Verfolgungsdaten den lokalen projizierten Datenpunkt enthalten; und
Erzeugen einer grafischen Darstellung für die Veranstaltung, die sowohl einen Standort des Fernathleten auf der Grundlage der synchronisierten Fern-Verfolgungsdaten als auch einen Standort des lokalen Athleten auf der Grundlage der lokalen Verfolgungsdaten anzeigt.

2. Das Verfahren nach Anspruch 1, wobei das lokale Verfolgungssystem die lokalen erfassten Positionen auf der Grundlage von mindestens drei der zweiten Empfänger bestimmt, die die drahtlosen Übertragungen decodieren.

3. Das Verfahren nach Anspruch 1 oder Anspruch 2, das ferner das Ansteuern eines Pacing-Systems oder einer Laufbandanzeige am lokalen Veranstaltungsort mit den synchronisierten Fern-Verfolgungsdaten umfasst, um dem lokalen Athleten die synchronisierten Fern-Verfolgungsdaten anzuzeigen.

4. Das Verfahren nach einem der Ansprüche 1 bis 3, das ferner das gleichzeitige Anzeigen der lokalen Verfolgungsdaten und der synchronisierten Fern-Verfolgungsdaten auf mindestens einem Teil einer Karte des lokalen Veranstaltungsortes umfasst.

5. Das Verfahren nach einem der Ansprüche 1 bis 4, das ferner das Bestimmen der lokalen Startzeit auf der Grundlage eines am lokalen Veranstaltungsort erzeugten Tageszeitsignals umfasst.

6. Das Verfahren nach einem der Ansprüche 1 bis 5,

das ferner das Erzeugen, am Fernveranstaltungsort, eines Fern-Startsignals zur Fern-Startzeit umfasst;
wobei das Erzeugen des lokalen Startsignals und das Erzeugen des Fern-Startsignals unabhängig voneinander erfolgen.

7. Das Verfahren nach einem der Ansprüche 1 bis 5,

das ferner das Erzeugen, am Fernveranstaltungsort, eines Fern-Startsignals zur Fern-Startzeit umfasst;
wobei das Erzeugen des lokalen Startsignals und das Erzeugen des Fern-Startsignals gleichzeitig auf der Grundlage eines Tageszeitsignals erfolgen, das an jedem der Fernveranstaltungsorte und lokalen Veranstaltungsorte erzeugt wird.

8. Das Verfahren nach einem der Ansprüche 1 bis 7, wobei das Synchronisieren der Fern-Verfolgungsdaten umfasst:
Auswählen, wenn die lokale verstrichene Zeit kleiner ist als die Fern-verstrichene Zeit, eines nächstgelegenen Datenpunkts der Fern-Verfolgungsdaten, der der lokalen verstrichenen Zeit am nächsten liegt, wobei die synchronisierten Fern-Verfolgungsdaten den nächstgelegenen Datenpunkt enthalten.

9. Das Verfahren nach einem der Ansprüche 1 bis 8, das ferner umfasst:

Übertragen, an den Fernveranstaltungsort und über das Netzwerk, der lokalen Verfolgungsdaten und der lokalen Startzeit;
Synchronisieren, am Fernveranstaltungsort und auf der Grundlage der lokalen und der Fern-Startzeit, der lokalen Verfolgungsdaten mit den Fern-Verfolgungsdaten, um synchronisierte lokale Verfolgungsdaten zu erzeugen; und
Ausgeben, am Fernveranstaltungsort, der Fern-Verfolgungsdaten und der synchronisierten lokalen Verfolgungsdaten.

10. Das Verfahren nach Anspruch 9, wobei das Synchronisieren der lokalen Verfolgungsdaten umfasst:

Extrapolieren, wenn eine Fern-verstrichene Zeit größer ist als eine lokale verstrichene Zeit, der lokalen Verfolgungsdaten, um einen Fern-projizierten Datenpunkt des Fernathleten zu erzeugen, der der Fern-verstrichenen Zeit entspricht, wobei die synchronisierten lokalen Verfolgungsdaten den Fern-projizierten Datenpunkt enthalten; und
Auswählen, wenn die Fern-verstrichene Zeit kleiner ist als die lokale verstrichene Zeit, eines nächstgelegenen Datenpunkts der lokalen Verfolgungsdaten, der der Fern-verstrichenen Zeit am nächsten liegt, wobei die synchronisierten lokalen Verfolgungsdaten den nächstgelegenen Datenpunkt enthalten.

11. System zur Echtzeit-Verfolgung einer Vielzahl von Athleten, die an einer Veranstaltung über eine Vielzahl von geografisch getrennten Veranstaltungsorten hinweg gegeneinander antreten, umfassend:

ein lokales Startsystem, das ein lokales Startsignal zu einer lokalen Startzeit erzeugt, um anzuzeigen, wann die Veranstaltung an einem lokalen Veranstaltungsort der Vielzahl von geografisch getrennten Veranstaltungsorten beginnt; und
ein lokales Rechensystem, das mit dem lokalen Startsystem in Verbindung steht, wobei das lokale Rechensystem einen Prozessor und einen Speicher umfasst, der kommunikativ mit dem Prozessor verbunden ist, wobei der Speicher maschinenlesbare Anweisungen speichert, die, wenn sie vom Prozessor ausgeführt werden, das lokale Rechensystem steuern, um:

die lokale Startzeit vom lokalen Startsystem zu empfangen;
von einem lokalen Verfolgungssystem am lokalen Veranstaltungsort lokale Verfolgungsdaten für einen lokalen Athleten der Vielzahl von Athleten zu empfangen, wobei die lokalen Verfolgungsdaten in Echtzeit durch eine Vielzahl von ersten Empfängern ermittelt werden, die drahtlose Übertragungen erfassen, die in Intervallen von einem ersten Verfolgungsetikett gesendet werden, das am lokalen Athleten angebracht ist, wobei die lokalen Verfolgungsdaten in Echtzeit erfasste lokale Positionen und zugehörige lokale Erfassungszeitpunkte definieren;

eine Fern-Startzeit zu empfangen, die von einem Fern-Startsystem an einem Fernveranstaltungsort der Vielzahl von geografisch getrennten Veranstaltungsorten bestimmt wurde und angibt, wann die Veranstaltung am Fernveranstaltungsort begonnen hat;

von einem Fern-Verfolgungssystem Fern-Verfolgungsdaten für einen Fernathleten der Vielzahl von Athleten zu empfangen, wobei die Fern-Verfolgungsdaten in Echtzeit durch eine Vielzahl von zweiten Empfängern ermittelt werden, die eine drahtlose Übertragung erfassen, die in Intervallen von einem zweiten Verfolgungsetikett gesendet wird, das am Fernathleten angebracht ist, wobei die Fern-Verfolgungsdaten in Echtzeit erfasste Fern-Positionen und zugehörige Fern-Erfassungszeitpunkte definieren;

auf der Grundlage der lokalen und der Fern-Startzeit die Fern-Verfolgungsdaten mit den lokalen Verfolgungsdaten zu synchronisieren, um synchronisierte Fern-Verfolgungsdaten zu erzeugen; und

wenn eine lokale verstrichene Zeit am lokalen Veranstaltungsort größer ist als eine Fern-verstrichene Zeit am Fernveranstaltungsort, die Fern-Verfolgungsdaten zu extrapolieren, um einen lokalen projizierten Datenpunkt des Fernathleten zu erzeugen, der der lokalen verstrichenen Zeit entspricht, wobei die synchronisierten Fern-Verfolgungsdaten den lokalen projizierten Datenpunkt enthalten; und

eine grafische Darstellung für die Veranstaltung zu erzeugen, die sowohl einen Standort des Fernathleten auf der Grundlage der synchronisierten Fern-Verfolgungsdaten als auch einen Standort des lokalen Athleten auf der Grundlage der lokalen Verfolgungsdaten anzeigt.

12. Das System nach Anspruch 11, wobei das lokale Verfolgungssystem die lokalen Verfolgungsdaten auf der Grundlage von mindestens drei der ersten Empfänger erzeugt, die die drahtlose Übertragung decodieren.

13. Das System nach Anspruch 11 oder Anspruch 12, das ferner ein lokales Pacing-System oder eine Laufbandanzeige umfasst, das/die dem lokalen Athleten die synchronisierten Fern-Verfolgungsdaten anzeigt.

14. Das System nach einem der Ansprüche 11 bis 13, das ferner ein Videosystem umfasst, das die lokalen Verfolgungsdaten und die synchronisierten Fern-Verfolgungsdaten anzeigt.

15. Das System nach einem der Ansprüche 11 bis 14,

das ferner einen GNSS-Empfänger umfasst, der ein Tageszeitsignal ausgibt;
wobei das lokale Startsystem die lokale Startzeit auf der Grundlage des Tageszeitsignals bestimmt.

**Revendications**

1. Procédé de suivi en temps réel d'une pluralité d'athlètes participant à un événement dans une pluralité de sites géographiquement séparés, ledit procédé étant mis en œuvre pendant l'événement et sur un site local de la pluralité de sites géographiquement séparés, ledit procédé comprenant :

la génération, par un système de départ sur le site local, d'un signal de départ local à un instant de départ local indiquant quand l'événement a commencé sur le site local ;
la réception, en provenance d'un site distant de la pluralité de sites géographiquement séparés et via un réseau, d'un instant de départ distant déterminé par un système de départ distant sur le site distant, l'instant de départ distant indiquant quand l'événement a commencé sur le site distant ;
la réception, en provenance d'un système de suivi distant, de données de suivi distantes pour un athlète distant de la pluralité d'athlètes, l'athlète distant se trouvant sur le site distant, les données de suivi distantes étant déterminées en temps réel par une pluralité de premiers récepteurs détectant une transmission sans fil émise à intervalles par une première étiquette de suivi fixée à l'athlète distant, les données de suivi distantes définissant des emplacements suivis distants en temps réel et des instants suivis distants associés ;
la réception, en provenance d'un système de suivi local situé sur le site local, de données de suivi locales en temps réel pour un athlète local de la pluralité d'athlètes, l'athlète local se trouvant sur le site local, les données de suivi locales étant déterminées en temps réel par une pluralité de deuxièmes récepteurs détectant des transmissions sans fil émises à intervalles par une deuxième étiquette de suivi fixée à l'athlète local, les données de suivi locales définissant des emplacements suivis locaux en temps réel et des instants suivis locaux associés ;

la synchronisation, sur la base des instants de départ local et distant, des données de suivi distantes avec les données de suivi locales pour générer des données de suivi distantes synchronisées ; et

l'extrapolation, lorsqu'un temps écoulé local sur le site local est supérieur à un temps écoulé distant sur le site distant, des données de suivi distantes pour générer un point de données projeté local de l'athlète distant correspondant au temps écoulé local, les données de suivi distantes synchronisées incluant le point de données projeté local ; et

la génération d'un affichage graphique pour l'évènement indiquant à la fois un emplacement de l'athlète distant sur la base des données de suivi distantes synchronisées et un emplacement de l'athlète local sur la base des données de suivi locales.

2. Procédé selon la revendication 1, le système de suivi local déterminant les emplacements suivis locaux sur la base d'au moins trois des deuxièmes récepteurs décodant les transmissions sans fil.

3. Procédé selon la revendication 1 ou la revendication 2, comprenant en outre la commande d'un système d'allure ou d'un tableau d'affichage à ruban sur le site local avec les données de suivi distantes synchronisées pour indiquer les données de suivi distantes synchronisées à l'athlète local.

4. Procédé selon l'une quelconque des revendications 1 à 3, comprenant en outre l'affichage simultané des données de suivi locales et des données de suivi distantes synchronisées sur au moins une partie d'une carte du site local.

5. Procédé selon l'une quelconque des revendications 1 à 4, comprenant en outre la détermination de l'instant de départ local sur la base d'un signal d'heure de la journée généré sur le site local.

6. Procédé selon l'une quelconque des revendications 1 à 5, comprenant en outre la génération, sur le site distant, d'un signal de départ distant à l'instant de départ distant ;

dans lequel ladite génération du signal de départ local et ladite génération du signal de départ distant se produisent indépendamment.

7. Procédé selon l'une quelconque des revendications 1 à 5, comprenant en outre la génération, sur le site distant, d'un signal de départ distant à l'instant de départ distant ;

dans lequel ladite génération du signal de départ local et ladite génération du signal de départ distant se produisent simultanément sur la base d'un signal d'heure de la journée généré sur chacun des sites distant et local.

8. Procédé selon l'une quelconque des revendications 1 à 7, dans lequel ladite synchronisation des données de suivi distantes comprend :

la sélection, lorsque le temps écoulé local est inférieur au temps écoulé distant, d'un point de données le plus proche des données de suivi distantes le plus proche du temps écoulé local, les données de suivi distantes synchronisées incluant le point de données le plus proche.

9. Procédé selon l'une quelconque des revendications 1 à 8, comprenant en outre :

la transmission, au site distant et via le réseau, des données de suivi locales et de l'instant de départ local;

la synchronisation, sur le site distant et sur la base des instants de départ local et distant, des données de suivi locales avec les données de suivi distantes pour générer des données de suivi locales synchronisées ; et

la sortie, sur le site distant, des données de suivi distantes et des données de suivi locales synchronisées.

10. Procédé selon la revendication 9, dans lequel ladite synchronisation des données de suivi locales comprend :

l'extrapolation, lorsqu'un temps écoulé distant est supérieur à un temps écoulé local, des données de suivi locales pour générer un point de données projeté distant de l'athlète local correspondant au temps écoulé distant, les données de suivi locales synchronisées incluant le point de données projeté distant ; et

la sélection, lorsque le temps écoulé distant est inférieur au temps écoulé local, d'un point de données le plus proche des données de suivi locales le plus proche du temps écoulé distant, les données de suivi locales synchronisées incluant le point de données le plus proche.

11. Système de suivi en temps réel d'une pluralité d'athlètes participant à un événement dans une pluralité de sites géographiquement séparés, comprenant :

un système de départ local qui génère un signal de départ local à un instant de départ local pour indiquer quand l'événement commence sur un site local de la pluralité de sites géographiquement séparés ; et

un système informatique local en communication avec le système de départ local, le système informatique local comprenant un processeur et une mémoire couplée de manière communicante au processeur, la mémoire stockant des instructions lisibles par machine qui, lorsqu'elles sont exécutées par le processeur, contrôlent le système informatique local pour :

recevoir l'instant de départ local en provenance du système de départ local ;

recevoir, en provenance d'un système de suivi local sur le site local, des données de suivi locales pour un athlète local de la pluralité d'athlètes, les données de suivi locales étant déterminées en temps réel par une pluralité de premiers récepteurs détectant des transmissions sans fil émises à intervalles par une première étiquette de suivi fixée à l'athlète local, les données de suivi locales définissant des emplacements suivis locaux en temps réel et des instants suivis locaux associés ;

recevoir un instant de départ distant, déterminé par un système de départ distant sur un site distant de la pluralité de sites géographiquement séparés, indiquant quand l'événement a commencé sur le site distant ;

recevoir, en provenance d'un système de suivi distant, des données de suivi distantes pour un athlète distant de la pluralité d'athlètes, les données de suivi distantes étant déterminées en temps réel par une pluralité de deuxièmes récepteurs détectant une transmission sans fil émise à intervalles par une deuxième étiquette de suivi fixée à l'athlète distant, les données de suivi distantes définissant des emplacements suivis distants en temps réel et des instants suivis distants associés ;

synchroniser, sur la base des instants de départ local et distant, les données de suivi distantes avec les données de suivi locales pour générer des données de suivi distantes synchronisées ; et

extrapoler, lorsqu'un temps écoulé local sur le site local est supérieur à un temps écoulé distant sur le site distant, les données de suivi distantes pour générer un point de données projeté local de l'athlète distant correspondant au temps écoulé local, les données de suivi distantes synchronisées incluant le point de données projeté local ; et

générer un affichage graphique pour l'événement indiquant à la fois un emplacement de l'athlète distant sur la base des données de suivi distantes synchronisées et un emplacement de l'athlète local sur la base des données de suivi locales.

12. Système selon la revendication 11, le système de suivi local générant les données de suivi locales sur la base d'au moins trois des premiers récepteurs décodant la transmission sans fil.

13. Système selon la revendication 11 ou la revendication 12, comprenant en outre un système d'allure local ou un tableau d'affichage à ruban qui indique les données de suivi distantes synchronisées à l'athlète local.

14. Système selon l'une quelconque des revendications 11 à 13, comprenant en outre un système vidéo qui affiche les données de suivi locales et les données de suivi distantes synchronisées.

15. Système selon l'une quelconque des revendications 11 à 14, comprenant en outre un récepteur de système mondial de navigation par satellite qui génère un signal d'heure de la journée ;

dans lequel le système de départ local détermine l'instant de départ local sur la base du signal d'heure de la journée.

100

VENUE A

112(1)

112(2)

102

112(6)

106

104

112(3)

| LOCAL TRACKING SYSTEM 108(A) | LOCAL ELECTRONIC STARTING SYSTEM 118 | OUTPUT DEVICE 110 |

*FIG. 1*

112(5)

112(4)

---

VENUE B

112(1)

112(2)

102

112(6)

106

104

112(3)

| LOCAL TRACKING SYSTEM 108(B) | LOCAL ELECTRONIC STARTING SYSTEM 118 | OUTPUT DEVICE 110 |

COMMUNICATIONS NETWORK 114

SERVER 116

112(5)

112(4)

---

VENUE C

112(1)

112(2)

102

112(6)

106

104

112(3)

| LOCAL TRACKING SYSTEM 108(C) | LOCAL ELECTRONIC STARTING SYSTEM 118 | OUTPUT DEVICE 110 |

112(5)

112(4)

200

Standby State —201

Operator at each venue indicates to the local starting system that participants are preparing. —202

Reset —220

Each local electronic starting system generates "on your marks" announcement. —204

Error ◁----- Each venue confirms that "on your marks" was announced. —206

Each local electronic starting system generates "set" announcement. —208

Error ◁----- Each venue confirms that "set" was announced. —210

Each local electronic starting system generates a start signal. —212

Error ◁----- Each local electronic starting system confirms that the start signal occurred. —214

Yes ◁ False Start? —216

No

Started State —218

*FIG. 2*

VENUE A

302
318
304
316
306
308

VENUE B

304
302
318
310
314
306

VENUE C

312
302
304
316
314
306

*FIG. 3*

**FIG. 4**

EP 4 245 044 B1

**FIG. 5**

EP 4 245 044 B1

EP 4 245 044 B1

**FIG. 6**

TIME - 0:27.45
WR:     43.03
OR:     43.03

*702*

*710(1)*

*710(2)*

*704*

*700*

*FIG. 7*

EP 4 245 044 B1

*FIG. 8*

FIG. 9

TAG 901

ANTENNA 1006

CPU & ELECTRONICS 1004

TAG ID 1008

BATTERY 1002

*FIG. 10*

1100

901

1102

*FIG. 11*

1200

SIGNAL

1202(1)   1202(2)   1202(3)   1202(4)

100   200   300   400   TIME (ms)

*FIG. 12*

1006

100 ms
INTERVALS

1202(1)

1202(2)

1202(3)

1202(4)

*FIG. 13*

901

1421

ANT 1006

1402

PROC 1404 | TX/RX 1406 | ID 1008

1420

1420

1422

1002

**FIG. 14**

FIG. 15

**EP 4 245 044 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9950238 B
- US 10433113 B
- US 2013231760 A1
- US 6002336 A